# FASCICULE DE BREVET EUROPEEN

(11) **EP 3 087 785 B1**
(45) Date de publication et mention de la délivrance du brevet: **07.08.2019**
(21) Numéro de dépôt: 14821611.2
(22) Date de dépôt: 18.12.2014
(51) Int. Cl.: H04W 52/02, H04L 12/12, H04W 28/02, H04W 84/12

(54) **SYSTÈME DE TRANSMISSION COMPRENANT DES PREMIER ET SECOND DISPOSITIFS PONTS**
ÜBERTRAGUNGSSYSTEM MIT ERSTER UND ZWEITER BRÜCKENVORRICHTUNG
TRANSMISSION SYSTEM INCLUDING FIRST AND SECOND BRIDGE DEVICES

(30) Priorité: 26.12.2013 FR 1363616
(43) Date de publication de la demande: 02.11.2016
(73) Titulaire: Sagemcom Broadband SAS, 92500 Rueil-Malmaison (FR)
(72) Inventeur: DANGY-CAYE, Nicolas, F-92500 Rueil Malmaison (FR)
(74) Mandataire: Cabinet Le Guen Maillet
(86) Numéro de dépôt international: PCT/EP2014/078593
(87) Numéro de publication internationale: WO 2015/097070

(56) Documents cités:
- DE-A1-102010 003 248
- US-A1- 2009 080 388
- US-A1- 2011 222 522
- RICCIARDI SERGIO ET AL: "Evaluating energy savings in WoL-enabled networks of PCs", INDUSTRIAL ELECTRONICS (ISIE), 2013 IEEE INTERNATIONAL SYMPOSIUM ON, IEEE, 28 mai 2013 (2013-05-28), pages 1-6, XP032564822, ISSN: 2163-5137, DOI: 10.1109/ISIE.2013.6739357 ISBN: 978-1-4673-5194-2 [extrait le 2014-02-12]

## Description

La présente invention concerne un système de transmission de données depuis un dispositif fournisseur de données vers un dispositif consommateur de données, le dispositif fournisseur de données étant connecté au dispositif consommateur de données via un premier dispositif pont réalisant un pont entre un premier lien filaire et un réseau de communication sans-fil et un second dispositif pont réalisant un pont entre un second lien filaire et le réseau de communication sans-fil. La présente invention concerne plus particulièrement la gestion de la consommation énergétique dans un tel système de transmission de données.

Dans un système de transmission de données, il est connu d'utiliser des dispositifs ponts (« bridge device » en anglais) entre un lien filaire, *e.g.* de type Ethernet, et un lien sans-fil, *e.g.* de type Wi-Fi, de manière à apporter de la flexibilité à l'installation du système de transmission de données. La mise en oeuvre de ces dispositifs ponts permet ainsi d'éviter d'avoir à installer un câble directement entre un dispositif fournisseur de données, *e.g.* une passerelle résidentielle, et un dispositif consommateur de données, *e.g.* un dispositif décodeur STB (« Set-Top Box » en anglais) du système de transmission de données. En effet, l'infrastructure dans

La demande de brevet US 2011/222522 divulgue un système de station de radio pour un réseau sans fil avec au moins deux noeuds de réseau d'accès.

La publication de Sergio Riccardi intitulée « Evaluating energy savings in WoL-enabled networks of PCs ») décrit un système d'économie d'énergie dans un réseau d'ordinateurs s'appuyant sur la technologie WoL.

Il est souhaitable de pallier ces inconvénients de l'état de la technique. Il est notamment souhaitable de fournir une solution qui permette de réduire la consommation énergétique dans un système de transmission de données dans lequel un dispositif fournisseur de données est relié à un dispositif consommateur de données via un ensemble de deux tels dispositifs ponts, sans compromettre la mise en oeuvre des transmissions de données depuis le dispositif fournisseur de données jusqu'au dispositif consommateur de données, c'est-à-dire sans impact ressenti par un utilisateur du système de transmission de données.

L'invention concerne un système de transmission de données comprenant un premier dispositif pont et un second dispositif pont destinés à être interconnectés via un réseau de communication sans-fil, le premier dispositif pont étant adapté à connecter un dispositif fournisseur de données via un premier lien filaire, le second dispositif pont étant adapté à connecter un dispositif consommateur de données via un second lien filaire. Le système est tel que chaque dispositif pont est configurable dans l'un des modes suivants : un mode de fonctionnement nominal ; un mode d'économie d'énergie dans lequel, au moins, des interfaces avec un dit lien filaire et avec le réseau de communication sont actives à performance réduite ; et un mode d'arrêt dans lequel, au moins, l'interface avec le réseau de communication est désactivée, et dans lequel l'interface avec un dit lien filaire est active à performance réduite. De plus : le premier dispositif pont est adapté pour basculer du mode de fonctionnement nominal au mode d'arrêt suite à une détection de désactivation du premier lien filaire ; le premier dispositif pont est adapté pour basculer du mode de fonctionnement nominal au mode d'économie d'énergie suite à une détection que le second dispositif pont est déconnecté du réseau de communication sans-fil ou que le second dispositif pont est passé en mode d'économie d'énergie ou à une détection de volume de trafic bidirectionnel entre ledit dispositif fournisseur et ledit dispositif consommateur inférieur ou égal à un seuil prédéfini ; le second dispositif pont est adapté pour basculer du mode de fonctionnement nominal au mode d'arrêt suite à une détection de désactivation du second lien filaire ; et le second dispositif pont est adapté pour basculer du mode de fonctionnement nominal au mode d'économie d'énergie suite à une détection de mise en hibernation dudit dispositif consommateur ou à une détection de déconnexion du réseau de communication sans-fil ou à une détection de volume de trafic bidirectionnel entre ledit dispositif fournisseur et ledit dispositif consommateur inférieur ou égal à un seuil prédéfini.

au moins, l'interface avec le réseau de communication est désactivée, et dans lequel l'interface avec un dit lien filaire est active à performance réduite. De plus : le premier dispositif pont est adapté pour basculer du mode de fonctionnement nominal au mode d'arrêt suite à une détection de désactivation du premier lien filaire ; le premier dispositif pont est adapté pour basculer du mode de fonctionnement nominal au mode d'économie d'énergie suite à une détection que le second dispositif pont est déconnecté du réseau de communication sans-fil ou que le second dispositif pont est passé en mode d'économie d'énergie ou à une détection de volume de trafic bidirectionnel entre ledit dispositif fournisseur et ledit dispositif consommateur inférieur ou égal à un seuil prédéfini ; le second dispositif pont est adapté pour basculer du mode de fonctionnement nominal au mode d'arrêt suite à une détection de désactivation du second lien filaire ; et le second dispositif pont est adapté pour basculer du mode de fonctionnement nominal au mode d'économie d'énergie suite à une détection de mise en hibernation dudit dispositif consommateur ou à une détection de déconnexion du réseau de communication sans-fil ou à une détection de volume de trafic bidirectionnel entre ledit dispositif fournisseur et ledit dispositif consommateur inférieur ou égal à un seuil prédéfini.

Selon un mode de réalisation particulier, le premier dispositif pont est adapté pour basculer du mode d'arrêt au mode de fonctionnement nominal suite à une détection de réactivation du premier lien filaire, le premier dispositif pont est adapté pour basculer du mode d'économie d'énergie au mode de fonctionnement nominal suite à une réception via le premier lien filaire d'une demande de mise en fonctionnement nominal dudit dispositif consommateur ou à une détection de volume de trafic entre ledit dispositif fournisseur et ledit dispositif consommateur supérieur ou égal à un seuil prédéfini, ou suite à une reconnexion du second dispositif pont au réseau de communication sans-fil, le second dispositif pont est adapté pour basculer du mode d'arrêt au mode de fonctionnement nominal suite à une détection de réactivation du second lien filaire, et le second dispositif pont est adapté pour basculer du mode d'économie d'énergie au mode de fonctionnement nominal suite à une réception via le réseau de communication sans-fil d'une demande de mise en fonctionnement nominal dudit dispositif consommateur ou à une réception via le second lien filaire d'un message indiquant que ledit dispositif consommateur est sorti d'hibernation ou à une détection de volume de trafic entre ledit dispositif fournisseur et ledit dispositif consommateur supérieur ou égal à un seuil prédéfini.

Selon un mode de réalisation particulier, la demande de mise en fonctionnement nominal dudit dispositif consommateur est un paquet magique à destination dudit dispositif consommateur selon le protocole Wake On LAN.

Selon un mode de réalisation particulier, le second dispositif pont détecte la mise en hibernation dudit dispositif consommateur : en émettant régulièrement un message de sonde à destination dudit dispositif consommateur pour tester si ledit dispositif consommateur est mis en hibernation ; ou en analysant des échanges entre ledit dispositif fournisseur et ledit dispositif consommateur selon le standard UPnP Low Power ; ou en recevant dudit dispositif consommateur un message indiquant une mise en hibernation dudit dispositif consommateur.

Selon un mode de réalisation particulier, la détection de volume de trafic bidirectionnel entre ledit dispositif fournisseur et ledit dispositif consommateur est effectuée par comparaison d'un remplissage des files d'attente du dispositif pont concerné avec des seuils respectifs prédéfinis.

Selon un mode de réalisation particulier, les premier et second liens filaires sont de type Ethernet et le réseau de communication sans-fil est de type Wi-Fi.

Selon un mode de réalisation particulier, le système comporte ledit dispositif fournisseur et ledit dispositif consommateur, ledit dispositif fournisseur est une passerelle résidentielle adaptée pour transmettre des données audio-vidéo audit dispositif consommateur, et ledit dispositif consommateur est un dispositif décodeur adapté pour décoder les données audio-vidéo reçues du dispositif fournisseur.

L'invention concerne également un procédé mis en oeuvre par un système de transmission de données comprenant un premier dispositif pont et un second dispositif pont interconnectés via un réseau de communication sans-fil, le premier dispositif pont étant connecté à un dispositif fournisseur de données via un premier lien filaire, le second dispositif pont étant connecté à un dispositif consommateur de données via un second lien filaire. Le procédé est tel que chaque dispositif pont est configurable dans l'un des modes suivants : un mode de fonctionnement nominal ; un mode d'économie d'énergie dans lequel, au moins, des interfaces avec un dit lien filaire et avec le réseau de communication sont actives à performance réduite ; et un mode d'arrêt dans lequel, au moins, l'interface avec le réseau de communication est désactivée, et dans lequel l'interface avec un dit lien filaire est active à performance réduite. De plus : le premier dispositif pont bascule du mode de fonctionnement nominal au mode d'arrêt suite à une détection de désactivation du premier lien filaire ; le premier dispositif pont bascule du mode de fonctionnement nominal au mode d'économie d'énergie suite à une détection que le second dispositif pont est déconnecté du réseau de communication sans-fil ou que le second dispositif pont est passé en mode d'économie d'énergie ou à une détection de volume de trafic bidirectionnel entre ledit dispositif fournisseur et ledit dispositif consommateur inférieur ou égal à un seuil prédéfini ; le second dispositif pont bascule du mode de fonctionnement nominal au mode d'arrêt suite à une détection de désactivation du second lien filaire ; et le second dispositif pont bascule du mode de fonctionnement nominal au mode d'économie d'énergie suite à une détection de mise en hibernation dudit dispositif consommateur ou à une détection de déconnexion du réseau de communication sans-fil ou à une détection de volume de trafic bidirectionnel entre ledit dispositif fournisseur et ledit dispositif consommateur inférieur ou égal à un seuil prédéfini.

L'invention concerne également un dispositif pont, dit premier dispositif pont, d'un système de transmission de données comprenant en outre un second dispositif pont, les premier et second dispositif ponts étant destinés à être interconnectés via un réseau de communication sans-fil, le premier dispositif pont étant adapté à connecter un dispositif fournisseur de données via un lien filaire, le second dispositif pont étant adapté à être connecté à un dispositif consommateur de données. Le premier dispositif pont est configurable dans l'un des modes suivants : un mode de fonctionnement nominal ; un mode d'économie d'énergie dans lequel, au moins, une interface avec ledit lien filaire et une interface avec le réseau de communication sont actives à performance réduite ; et un mode d'arrêt dans lequel, au moins, l'interface avec le réseau de communication est désactivée, et dans lequel l'interface avec ledit lien filaire est active à performance réduite. De plus : le premier dispositif pont est adapté pour basculer du mode de fonctionnement nominal au mode d'arrêt suite à une détection de désactivation du lien filaire ; et le premier dispositif pont est adapté pour basculer du mode de fonctionnement nominal au mode d'économie d'énergie suite à une détection que le second dispositif pont est déconnecté du réseau de communication sans-fil ou que le second dispositif pont est passé en mode d'économie d'énergie ou à une détection de volume de trafic bidirectionnel entre ledit dispositif fournisseur et ledit dispositif consommateur inférieur ou égal à un seuil prédéfini.

L'invention concerne également un dispositif pont, dit second dispositif pont, d'un système de transmission de données comprenant en outre un premier dispositif pont, les premier et second dispositifs ponts étant destinés à être interconnectés via un réseau de communication sans-fil, le premier dispositif pont étant adapté à être connecté à un dispositif fournisseur de données, le second dispositif pont étant adapté à connecter un dispositif consommateur de données via un lien filaire. Le second dispositif pont est configurable dans l'un des modes suivants : un mode de fonctionnement nominal ; un mode d'économie d'énergie dans lequel, au moins, une interface avec ledit lien filaire et une interface avec le réseau de communication sont actives ; et un mode d'arrêt dans lequel, au moins, l'interface avec le réseau de communication est désactivée, et dans lequel l'interface avec ledit lien filaire est active à performance réduite. De plus : le second dispositif pont est adapté pour basculer du mode de fonctionnement nominal au mode d'arrêt suite à une détection de désactivation du lien filaire ; et le second dispositif pont est adapté pour basculer du mode de fonctionnement nominal au mode d'économie d'énergie suite à une détection de mise en hibernation dudit dispositif consommateur ou à une détection de déconnexion du réseau de communication sans-fil ou à une détection de volume de trafic bidirectionnel entre ledit dispositif fournisseur et ledit dispositif consommateur inférieur ou égal à un seuil prédéfini.

L'invention concerne également un procédé mis en oeuvre par un premier dispositif pont d'un système de transmission de données comprenant en outre un second dispositif pont, les premier et second dispositifs ponts étant interconnectés via un réseau de communication sans-fil, le premier dispositif pont étant connecté à un dispositif fournisseur de données via un lien filaire, le second dispositif pont étant connecté à un dispositif consommateur de données. Le procédé est tel que le premier dispositif pont est configurable dans l'un des modes suivants : un mode de fonctionnement nominal ; un mode d'économie d'énergie dans lequel, au moins, une interface avec ledit lien filaire et une interface avec le réseau de communication sont actives ; et un mode d'arrêt dans lequel, au moins, l'interface avec le réseau de communication est désactivée, et dans lequel l'interface avec ledit lien filaire est active à performance réduite. De plus : le premier dispositif pont bascule du mode de fonctionnement nominal au mode d'arrêt suite à une détection de désactivation du lien filaire ; et le premier dispositif pont bascule du mode de fonctionnement nominal au mode d'économie d'énergie suite à une détection que le second dispositif pont est déconnecté du réseau de communication sans-fil ou que le second dispositif pont est passé en mode d'économie d'énergie ou à une détection de volume de trafic bidirectionnel entre ledit dispositif fournisseur et ledit dispositif consommateur inférieur ou égal à un seuil prédéfini.

L'invention concerne également un procédé mis en oeuvre par un second dispositif pont d'un système de transmission de données comprenant en outre un premier dispositif pont, les premier et second dispositifs ponts étant interconnectés via un réseau de communication sans-fil, le premier dispositif pont étant connecté à un dispositif fournisseur de données, le second dispositif pont étant connecté à un dispositif consommateur de données via un lien filaire. Le procédé est tel que le second dispositif pont est configurable dans l'un des modes suivants : un mode de fonctionnement nominal ; un mode d'économie d'énergie dans lequel, au moins, une interface avec ledit lien filaire et une interface avec le réseau de communication sont actives à performance réduite ; et un mode d'arrêt dans lequel, au moins, l'interface avec le réseau de communication est désactivée, et dans lequel l'interface avec ledit lien filaire est à performance réduite. De plus : le second dispositif pont bascule du mode de fonctionnement nominal au mode d'arrêt suite à une détection de désactivation du lien filaire ; et le second dispositif pont bascule du mode de fonctionnement nominal au mode d'économie d'énergie suite à une détection de mise en hibernation dudit dispositif consommateur ou à une détection de déconnexion du réseau de communication sans-fil ou à une détection de volume de trafic bidirectionnel entre ledit dispositif fournisseur et ledit dispositif consommateur inférieur ou égal à un seuil prédéfini.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de transmission de données comportant un dispositif fournisseur de données et un dispositif consommateur de données interconnectés via un premier dispositif pont et un second dispositif pont, et dans lequel la présente invention peut être mise en oeuvre ;
- la Fig. 2 illustre schématiquement un exemple d'architecture matérielle du premier dispositif pont et/ou du second dispositif pont du système de la Fig. 1 ;
- les Figs. 3A à 3E illustrent schématiquement un premier scénario dans lequel le système de transmission de données passe d'un état de fonctionnement nominal à un état d'extinction partielle;
- les Figs. 4A à 4C illustrent schématiquement un premier scénario dans lequel le système de transmission de données passe d'un état d'extinction partielle à l'état de fonctionnement nominal ;
- les Figs. 5A à 5D illustrent schématiquement un premier scénario dans lequel le système de transmission de données passe de l'état de fonctionnement nominal à un état d'hibernation ;
- les Figs. 6A à 6C illustrent schématiquement un premier scénario dans lequel le système de transmission de données passe d'un état d'hibernation à l'état de fonctionnement nominal ;
- les Figs. 7A à 7C illustrent schématiquement un second scénario dans lequel le système de transmission de données passe d'un état d'hibernation à l'état de fonctionnement nominal ;
- les Figs. 8A à 8C illustrent schématiquement un second scénario dans lequel le système de transmission de données passe de l'état de fonctionnement nominal à un état d'hibernation ;
- les Figs. 9A et 9B illustrent schématiquement un troisième scénario dans lequel le système de transmission de données passe d'un état d'hibernation à l'état de fonctionnement nominal ;
- les Figs. 10A à 10D illustrent schématiquement un second scénario dans lequel le système de transmission de données passe d'un état de fonctionnement nominal à un état d'extinction partielle;
- les Figs. 11A à 11C illustrent schématiquement un second scénario dans lequel le système de transmission de données passe d'un état d'extinction partielle à l'état de fonctionnement nominal ;
- la Fig. 12 illustre schématiquement une machine d'états mise en oeuvre par le second dispositif pont pour réaliser les scénarii précédents ; et
- la Fig. 13 illustre schématiquement une machine d'états mise en oeuvre par le premier dispositif pont pour réaliser les scénarii précédents.

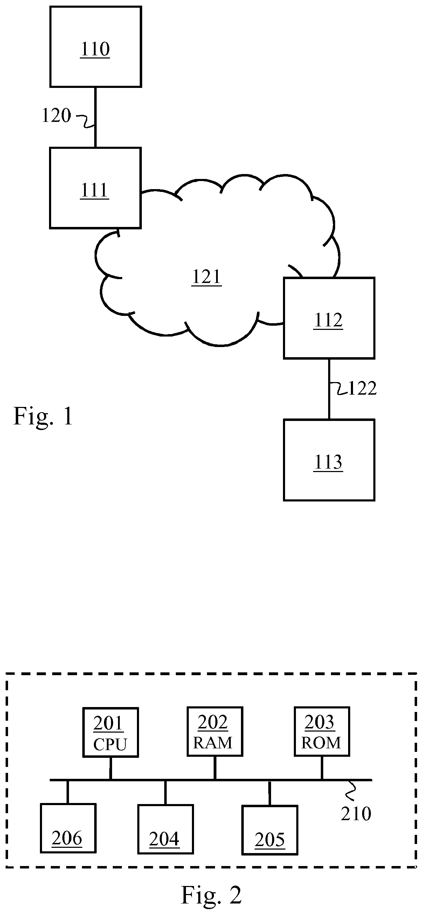

La Fig. 1 illustre schématiquement un système de transmission de données dans lequel la présente invention peut être mise en oeuvre.

Le système de transmission de données comporte un dispositif fournisseur de données 110 et un dispositif consommateur de données 113. Les données fournies par ledit dispositif fournisseur 110 sont préférentiellement des données audio-vidéo et des données de signalisation adaptées pour transporter lesdites données audio-vidéo depuis ledit dispositif fournisseur 110 vers ledit dispositif consommateur 113. D'autres données peuvent être fournies par ledit dispositif fournisseur 110, comme des données de diffusion (« broadcast data » en anglais) ou des données de maintenance.

Le dispositif fournisseur 110 est par exemple une passerelle résidentielle recevant des flux de données audio-vidéo via l'Internet (non représenté sur la Fig. 1) et qui sont destinés audit dispositif consommateur 113, qui est par exemple un dispositif décodeur STB (« Set-Top Box » en anglais).

Dans le système de transmission de données, ledit dispositif fournisseur 110 et ledit dispositif consommateur 113 sont interconnectés via un premier dispositif pont 111 et un second dispositif pont 112. Ledit dispositif fournisseur 110 est connecté au premier dispositif pont 111 via un premier lien filaire 120, par exemple de type Ethernet. Ledit dispositif consommateur 113 est connecté au second dispositif pont 112 via un second lien filaire 122. Le premier dispositif pont 111 est connecté au second dispositif pont 112 via un réseau de communication sans-fil 121, par exemple de type Wi-Fi. Les premier 111 et second 112 dispositifs ponts interconnectés par le réseau de communication sans-fil 121 permettent de donner de la flexibilité à l'installation du système de transmission de données, en évitant qu'un câble ou une série de câbles ne relie directement ledit dispositif fournisseur 110 et ledit dispositif consommateur 113.

Lorsque le réseau de communication sans-fil 121 est de type Wi-Fi, le premier dispositif pont 111 prend le rôle de point d'accès et le second dispositif pont 112 prend le rôle de dispositif client. Le rôle de point d'accès ou de dispositif client est acquis automatiquement au démarrage par découverte de l'équipements connecté par lien filaire au dispositif pont concerné, ou par analyse du trafic reçu, par exemple par détection et analyse de messages DHCP (« Dynamic Host Configuration Protocol » en anglais). Le rôle de point d'accès ou de dispositif client peut aussi être prédéfini, *e.g.* configuration d'un registre mémoire en sortie d'usine, ou défini par une configuration manuelle, *e.g.* présence d'un sélecteur (« switch » en anglais) sur les dispositifs ponts.

Chacun des premier 111 et second 112 dispositifs ponts comporte une première interface permettant de connecter un des liens filaires et une seconde interface permettant de connecter le réseau de communication sans-fil. Chacun des premier 111 et second 112 dispositifs ponts comporte en outre une unité de traitement assurant un pont entre lesdites première et seconde interfaces. Chacune des unités de traitement peut être réalisée sous forme d'un processeur associé à une mémoire, selon une architecture comme présentée ci-après en relation avec la Fig. 2, ou sous forme d'un composant dédié, tel qu'un FPGA ou un ASIC. Chacune des unités de traitement peut mettre en oeuvre un pilote (« driver » en anglais) de la seconde interface, e.g. un pilote Wi-Fi.

La première interface permettant de connecter un lien filaire peut être configurée de la manière suivante : soit pleinement active, c'est-à-dire que les ressources de ladite première interface disponibles pour la transmission de données depuis le dispositif fournisseur 110 vers ledit dispositif consommateur 113 sont à un premier niveau ; soit active à performance réduite, c'est-à-dire dont les ressources disponibles pour la transmission de données depuis le dispositif fournisseur 110 vers ledit dispositif consommateur 113 sont limitées à un second niveau inférieur au premier niveau.

Par exemple, lorsque ladite première interface est de type Ethernet, ladite première interface peut être active à performance réduite en mettant en oeuvre des mécanismes d'économie d'énergie, tels que « Energy Detect », « Energy Detect+ » comme décrit dans la demande de brevet US 2012/042189 A1, ou ceux décrits dans le standard IEEE 802.3az. En considérant le standard IEEE 802.3az, l'absence de trafic via le lien filaire est signifiée par l'envoi d'un signal LPI (« Low Power Idle » en anglais) en remplacement d'un signal « Idle » (en anglais, « inoccupé » en français). Le signal LPI est transmit régulièrement pour maintenir les interfaces concernées dans une configuration où lesdites interfaces sont actives à performance réduite. Lorsque le signal « Idle » réapparaît sur le lien, cela signifie un retour à une configuration où lesdites interfaces sont pleinement actives, généralement conditionné par un retour de trafic en amont de ces interfaces.

La seconde interface permettant de connecter le réseau de communication sans-fil 121 peut être configurée de la manière suivante : soit pleinement active, c'est-à-dire que les ressources de ladite seconde interface disponibles pour la transmission de données depuis le dispositif fournisseur 110 vers ledit dispositif consommateur 113 sont à un premier niveau ; soit active à performance réduite, c'est-à-dire dont les ressources disponibles pour la transmission de données depuis le dispositif fournisseur 110 vers ledit dispositif consommateur 113 sont limitées à un second niveau inférieur au premier niveau ; soit désactivée.

Par exemple, lorsque ladite seconde interface est de type Wi-Fi, ladite seconde interface peut être active à performance réduite en mettant en oeuvre un mécanisme de repli en mode SISO (« Single Input Single Output » en anglais) ou en mode MIMO MxM (avec 1<M<N) pour ce qui est du premier dispositif pont 111 ou un mécanisme d'économie d'énergie de type PSPM pour ce qui est du second dispositif pont 112. Ladite seconde interface du premier dispositif pont 111 peut en variante être active à performance réduite en mettant en outre en oeuvre un mécanisme d'alternance de périodes de désactivation de ladite seconde interface et de périodes de repli en mode SISO ou en mode MIMO MxM ; cette alternance de périodes actives et désactives est parfois appelée « doze mode » en anglais.

Il convient de noter que l'entête des trames Wi-Fi inclut une information indiquant si la seconde interface 312 du premier dispositif pont 111 et la seconde interface 322 du second dispositif pont 322 sont pleinement actives (mode CAM, pour « Constantly Available Mode » en anglais) ou actives à performance réduite (mode PSPM).

Ainsi, considérant que le réseau de communication sans-fil est de type Wi-Fi, même lorsque le second dispositif pont 112 a configuré son interface avec le réseau Wi-Fi de manière à être active à performance réduite, il est possible pour le premier dispositif pont 111 de transmettre des données au second dispositif pont 112. Le premier dispositif pont 111 met à jour une information TIM (« Traffic Indication Map » en anglais), en indiquant que des données sont en attente de la disponibilité du second dispositif pont 112. Le second dispositif pont 112 effectue des vérifications périodiques pour vérifier si l'information TIM indique qu'un message est en attente dudit second dispositif pont 112. Le second dispositif pont 112 envoie alors un message PS-POLL (« Power Save Poll » en anglais) pour signifier au premier dispositif pont 111 que le second dispositif pont 112 est prêt à recevoir les données en attente.

Chacune des unités de traitement peut être préférentiellement configurée de la manière suivante : soit pleinement active, c'est-à-dire que les ressources de ladite unité de traitement disponibles pour la transmission de données depuis le dispositif fournisseur 110 vers ledit dispositif consommateur 113 sont à un premier niveau ; soit active à performance réduite, c'est-à-dire que les ressources de ladite unité de traitement disponibles pour la transmission de données depuis le dispositif fournisseur 110 vers ledit dispositif consommateur 113 sont limitées à un second niveau inférieur au premier niveau ; soit désactivée.

Par exemple, lorsque ladite unité de traitement est un processeur, ladite unité de traitement peut être active à performance réduite en baissant la fréquence de fonctionnement dudit processeur, et être désactivée en mettant en oeuvre un mécanisme d'économie d'énergie de type « Suspend to RAM ». Il se peut aussi que ladite unité de traitement ne supporte pas de mécanisme de type « Suspend to RAM »). Dans ce cas, ladite unité de traitement reste pleinement active ou active à performance réduite dans les scénarii présentés ci-après. Il est toutefois considéré dans les scénarii présentés ci-après que chaque unité de traitement supporte pas un mécanisme de type « Suspend to RAM »).

La Fig. 2 illustre schématiquement un exemple d'architecture matérielle du premier dispositif pont 111 et/ou du second dispositif pont 112. Considérons que la Fig. 2 représente le premier dispositif pont 111. Le premier dispositif pont 111 comporte alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ou un disque dur HDD (« Hard Disk Drive » en anglais) ; une première interface 205 permettant de connecter le premier dispositif pont 111 audit dispositif fournisseur 110 via le premier lien filaire 120 ; et une seconde interface 206 permettant de connecter le premier dispositif pont 111 au second dispositif pont 112 via le réseau de communication sans-fil 121.

Lorsque la Fig. 2 représente un exemple d'architecture matérielle du second dispositif pont 112, la première interface 205 permet de connecter le second dispositif pont 112 audit dispositif consommateur 113 via le second lien filaire 122, et la seconde interface 206 permet de connecter le second dispositif pont 112 au premier dispositif pont 111 via le réseau de communication sans-fil 121.

Le processeur 201 est capable d'exécuter des instructions chargées dans la RAM 202 à partir de la ROM 203, d'une mémoire externe, d'un support de stockage, ou d'un réseau de communication. Lorsque le premier dispositif pont 111 est mis sous tension, le processeur 201 est capable de lire de la RAM 202 des instructions et de les exécuter. Ces instructions forment un programme d'ordinateur causant la mise en oeuvre, par le processeur 201, de tout ou partie des algorithmes et étapes décrits ici en relation avec le premier dispositif pont 111. De même, lorsque le second dispositif pont 112 est mis sous tension, le processeur 201 est capable de lire de la RAM 202 des instructions et de les exécuter. Ces instructions forment un programme d'ordinateur causant la mise en oeuvre, par le processeur 201, de tout ou partie des algorithmes et étapes décrits ici en relation avec le second dispositif pont 112.

Ainsi, tout ou partie des algorithmes et étapes décrits ici peut être implémenté sous forme logicielle par exécution d'un ensemble d'instructions par une machine programmable, tel qu'un DSP (« Digital Signal Processor » en anglais) ou un microcontrôleur. Tout ou partie des algorithmes et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

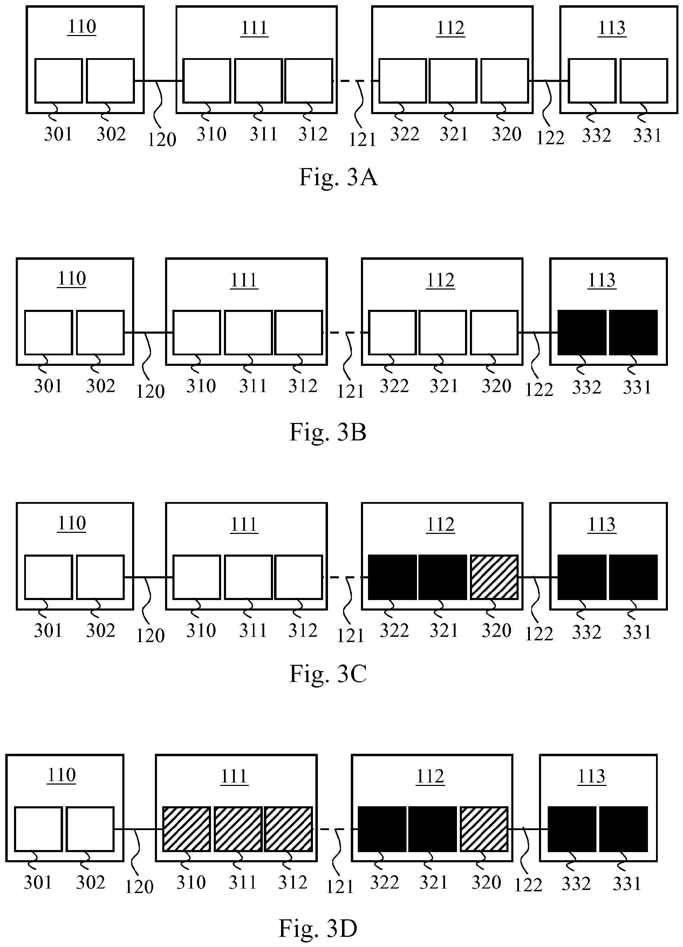

Les Figs. 3A à 3E, 4A à 4C, 10A à 10D et 11A à 11C illustrent schématiquement des scénarii dans lesquels le système de transmission de données bascule d'un état de fonctionnement nominal à un état d'extinction partielle, ou vice versa. Ces scénarii présentent divers états d'extinction partielle possibles du système de transmission de données, étant donné que chacun des dispositifs constituant le système de transmission de données peut se retrouver dans diverses configurations possibles.

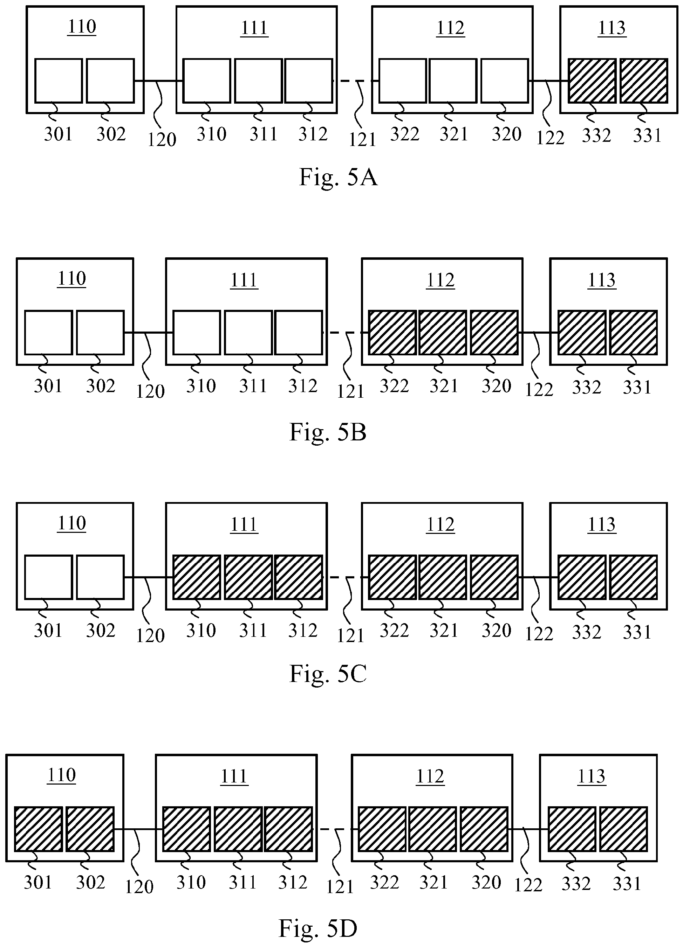

Les Figs. 5A à 5D, 6A à 6C, 7A à 7C, 8A à 8C, 9A et 9B illustrent schématiquement des scénarii dans lesquels le système de transmission de données bascule d'un état de fonctionnement nominal à un état d'hibernation, ou vice versa. Ces scénarii présentent divers états d'hibernation possibles du système de transmission de données, étant donné que chacun des dispositifs constituant le système de transmission de données peut se retrouver dans diverses configurations possibles.

Il est montré sur ces Figs. que ledit dispositif fournisseur 110 comporte une unité de traitement (« processing unit » en anglais) 301 et une interface 302 permettant de connecter ledit dispositif fournisseur 110 au premier dispositif pont 111. Il est aussi montré sur la Fig. 3A que ledit dispositif consommateur 113 comporte une unité de traitement 331 et une interface 332 permettant de connecter ledit dispositif consommateur 113 au second dispositif pont 112. Il est aussi montré sur ces Figs. que le premier dispositif pont 111 comporte une unité de traitement 311, une première interface 310 permettant de connecter le premier dispositif pont 111 audit dispositif fournisseur 110 et une seconde interface 312 permettant de connecter le premier dispositif pont 111 au second dispositif pont 112. Il est enfin montré sur ces Figs. que le second dispositif pont 112 comporte une unité de traitement 321, une première interface 320 permettant de connecter le second dispositif pont 112 audit dispositif consommateur 113 et une seconde interface 322 permettant de connecter le second dispositif pont 112 au premier dispositif pont 111.

Ledit dispositif fournisseur 110 peut se retrouver dans un parmi trois modes de fonctionnement différents : un mode de fonctionnement nominal dans lequel les composants constituant ledit dispositif fournisseur 110 sont pleinement actifs; un mode d'économie d'énergie dans lequel les composants constituant ledit dispositif fournisseur 110 sont actifs à performance réduite ; et un mode d'arrêt dans lequel les composants constituant ledit dispositif fournisseur 110 sont désactivés.

Dans les scénarii présentés ci-après, il est considéré que le dispositif fournisseur 110 n'effectue pas d'autres actions que celles rendues nécessaires par les échanges de données avec le dispositif consommateur 113. Si le dispositif fournisseur 110 doit effectuer d'autres actions que celles rendues nécessaires par les échanges de données avec le dispositif consommateur 113, alors le fait que de telles autres actions soient ou pas en cours est pris en compte avant de permettre une mise en mode d'économie d'énergie ou en mode d'arrêt ledit dispositif fournisseur 110.

Ledit dispositif consommateur 113 peut se retrouver dans un parmi trois modes de fonctionnement différents : un mode de fonctionnement nominal dans lequel les composants constituant ledit dispositif consommateur 113 sont pleinement actifs ; un mode d'économie d'énergie dans lequel les composants constituant ledit dispositif consommateur 113 sont actifs à performance réduite ; et un mode d'arrêt dans lequel les composants constituant ledit dispositif consommateur 113 sont désactivés.

Dans les scénarii présentés ci-après, il est considéré que le dispositif consommateur 113 n'effectue pas d'autres actions que celles rendues nécessaires par les échanges de données avec le dispositif fournisseur 110. Si le dispositif consommateur 113 doit effectuer d'autres actions que celles rendues nécessaires par les échanges de données avec le dispositif fournisseur 110, alors le fait que de telles autres actions soient ou pas en cours est pris en compte avant de permettre une mise en mode d'économie d'énergie ou en mode d'arrêt ledit dispositif consommateur 113.

Chacun des premier 111 et second 112 dispositifs ponts peut se retrouver dans un parmi trois modes de fonctionnement différents : un mode de fonctionnement nominal dans lequel les composants constituant ledit dispositif pont sont pleinement actifs ; un mode d'économie d'énergie dans lequel au moins les interfaces (avec le lien filaire concerné et avec le réseau de communication 121) sont actifs à performance réduite ; et un mode d'arrêt dans lequel au moins l'interface avec le réseau de communication 121 est désactivé, et dans lequel l'interface avec le lien filaire concerné est active à performance réduite.

La Fig. 3A illustre schématiquement le système de transmission de données dans un état de fonctionnement nominal, c'est-à-dire dans lequel chacun des dispositifs constituant ledit système est dans un mode de fonctionnement nominal. Ledit dispositif fournisseur 110 et ledit dispositif consommateur 113 sont opérationnels et connectés l'un à l'autre via les premier 111 et second 112 dispositifs ponts. Toutes les interfaces des premier 111 et second 112 dispositifs ponts, dudit dispositif fournisseur 110 et dudit dispositif consommateur 113 ont été initialisées, et sont actives et opérationnelles. Toutes les unités de traitement des premier 111 et second 112 dispositifs ponts, dudit dispositif fournisseur 110 et dudit dispositif consommateur 113 ont été initialisées, et sont actives et opérationnelles. Une telle configuration du système de transmission de données permet de passer un débit maximal de données entre ledit dispositif fournisseur 110 et ledit dispositif consommateur 113.

En considérant que les premier 120 et second 122 liens filaires sont de type Ethernet, les interfaces correspondantes des premier 111 et second 112 dispositifs ponts, dudit dispositif fournisseur 110 et dudit dispositif consommateur 113 sont configurées de telle sorte que les premier 120 et second 122 liens filaires sont négociés à la vitesse maximale des possibilités du système de transmission de données. En considérant que le réseau de communication sans-fil 121 est de type Wi-Fi, les interfaces correspondantes des premier 111 et second 112 dispositifs ponts sont configurées de telle sorte à être en mode CAM, c'est-à-dire que tous les canaux radio correspondants sont actifs en mode MIMO NxN (N>1) dans la bande fréquentielle à 5 GHz.

Les Figs. 3B à 3E illustrent schématiquement le passage du système de transmission de données de l'état de fonctionnement nominal à un état d'extinction partielle.

La Fig. 3B illustre schématiquement le système de transmission de données dans un état de fonctionnement dans lequel ledit dispositif consommateur 113 a reçu une commande d'arrêt, alors que le système de transmission de données se trouvait jusqu'alors dans un état de fonctionnement nominal tel qu'illustré sur la Fig. 3A. Une telle commande est par exemple reçue suite à une action utilisateur sur un bouton dédié dudit dispositif consommateur 113 ou d'une télécommande associée audit dispositif consommateur 113. Il s'ensuit que ledit dispositif consommateur 113 passe en mode d'arrêt, en désactivant l'interface 332, ainsi que l'unité de traitement 331. Le second lien filaire 122 devient alors inactif. Le fait que l'interface 332 et de l'unité de traitement 331 soient désactivées est représenté grâce à des carrés noirs sur la Fig. 3B.

Le passage en mode d'arrêt dudit dispositif consommateur 113 est détecté par l'interface 320 du second dispositif pont 112, puisque la désactivation de l'interface 332 a entraîné une désactivation du second lien filaire 122. L'interface 320 est alors reconfigurée de manière à être active à performance réduite, après éventuellement l'expiration d'une temporisation de durée prédéfinie. Cette reconfiguration de l'interface 320 permet de réaliser une économie d'énergie, tout en conservant la capacité de détecter un retour d'activité dudit dispositif consommateur 113 par réactivation du second lien filaire 122, telle que décrite dans les mécanismes Energy detect, Energy detect+ ou selon le standard IEEE 802.3az. Il s'en suit une désactivation de l'interface 322 du second dispositif pont 112 et une désactivation, si possible, de l'unité de traitement 321. La réactivation de l'unité de traitement 321 peut ultérieurement être réalisée grâce à un signal de réveil en provenance de l'interface 320. Le second dispositif pont 112 est alors déconnecté du réseau de communication sans-fil 121. Le fait que l'interface 322 et de l'unité de traitement 321 soient désactivées est représenté grâce à des carrés noirs sur la Fig. 3C, et le fait que l'interface 320 soit active à performance réduite est représenté grâce à un carré hachuré sur la Fig. 3C. Ainsi, le second dispositif pont 112 est configuré en mode d'arrêt.

La déconnexion du second dispositif pont 112 du réseau de communication sans-fil 121 par désactivation de l'interface 322 est détectée par l'interface 312 du premier dispositif pont 111. L'interface 312 est alors reconfigurée de manière à être active à performance réduite, afin de permettre de détecter une reconnexion ultérieure du second dispositif pont 112 au réseau de communication sans-fil 121. Il s'en suit une reconfiguration de l'interface 310 du premier dispositif pont 111 et, si possible de l'unité de traitement 311, de manière à être actives à performance réduite. Le premier lien filaire 120 reste cependant actif. Le fait que l'interface 310, l'interface 312 et l'unité de traitement 311 soient configurées de manière à être actives à performance réduite est représenté grâce à des carrés hachurés sur la Fig. 3D. Ainsi, le premier dispositif pont 111 est configuré en mode d'économie d'énergie.

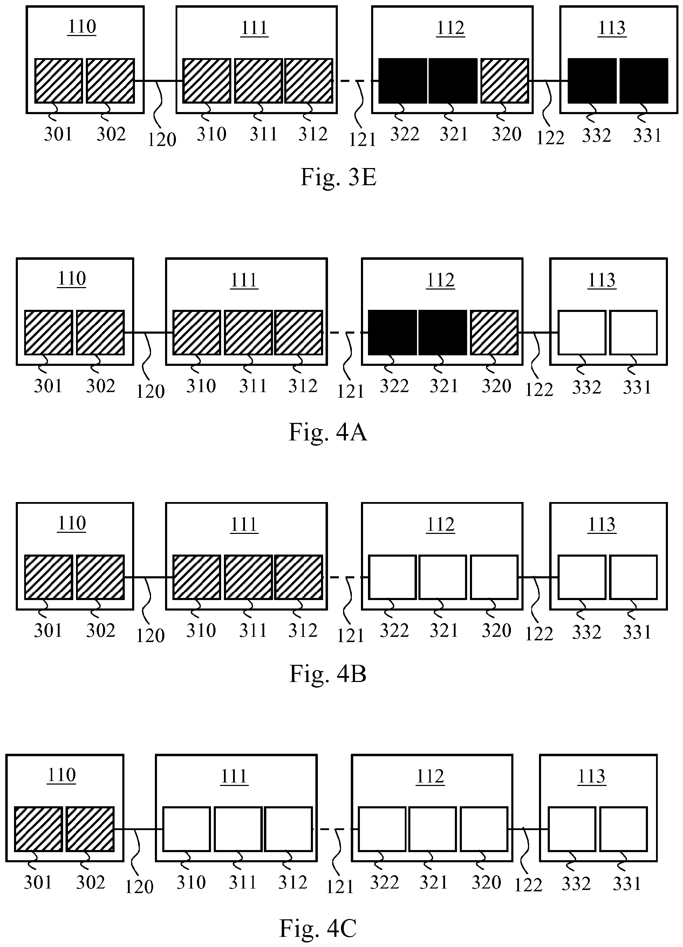

Le passage en mode d'économie d'énergie du premier dispositif pont 111 est détecté par l'interface 302 dudit dispositif fournisseur 110. Dans un premier mode de réalisation, dans le cadre du standard IEEE 802.3az, le passage en mode d'économie d'énergie est signifié par l'envoi régulier du signal LPI. Dans un second mode de réalisation, selon le mécanisme Energy Detect+, le passage en mode en mode d'économie d'énergie est signifié par une absence de signaux en provenance de l'interface 310. L'interface 302 est alors reconfigurée de manière à être active à performance réduite, afin de permettre de détecter un retour d'activité du premier dispositif pont 111 par retour de trafic via le premier lien filaire 120. Il s'en suit une reconfiguration, si possible, de l'unité de traitement 301 de manière à être active à performance réduite. Le fait que l'interface 302 et l'unité de traitement 301 soient reconfigurées de manière à être actives à performance réduite est représenté grâce à des carrés hachurés sur la Fig. 3E. Ainsi, ledit dispositif fournisseur 110 est configuré en mode d'économie d'énergie. Le système de transmission de données est alors dans un état d'extinction partielle. Le système de transmission de données est alors configuré de manière optimisée en termes de consommation énergétique et est apte à se réveiller au retour d'activité dudit dispositif consommateur 113.

Les Figs. 4A à 4C illustrent schématiquement un premier scénario dans lequel le système de transmission de données passe d'un état d'extinction partielle à l'état de fonctionnement nominal.

Le système de transmission de données se trouve dans l'état d'extinction partielle représenté sur la Fig. 3E, lorsque ledit dispositif consommateur 113 reçoit une commande d'allumage. Une telle commande est par exemple reçue suite à une action utilisateur sur un bouton dédié dudit dispositif consommateur 113 ou d'une télécommande associée audit dispositif consommateur 113. Il s'ensuit une reconfiguration de l'interface 332 et, si besoin, de l'unité de traitement 331 de manière à être pleinement actives. Cette situation est représentée sur la Fig. 4A. Le fait que l'interface 332 et l'unité de traitement 331 soient configurées de manière à être pleinement actives est représenté par des carrés blancs sur la Fig. 4A. Ainsi, ledit dispositif consommateur 113 est en mode de fonctionnement nominal. Le passage en mode de fonctionnement nominal dudit dispositif consommateur 113 est détecté par l'interface 320 du second dispositif pont 112 via le second lien filaire 122, puisque l'interface 320 était restée à l'écoute d'une réactivation du second lien filaire 122 par l'interface 332. Par exemple, la reconfiguration de l'interface 332 de manière à être pleinement active entraine une procédure de négociation de lien démarrant par l'émission de signaux NLP (« Normal Link Puise » en anglais), telle que décrite dans le standard IEEE802.3 clause 28.

Cette activité est détectée par l'interface 320, par exemple selon les mécanismes Energy Detect, Energy Detect+ ou selon le standard IEEE 802.3az. L'interface 320 est alors reconfigurée de manière à être pleinement active et l'interface 320 réveille l'unité de traitement 321 pour que l'unité de traitement 321 soit reconfigurée de manière à être pleinement active. L'interface 322 est alors reconfigurée de manière à être pleinement active et le second dispositif pont 112 effectue une reconnexion au réseau de communication sans-fil 121. Cette situation est représentée sur la Fig. 4B. Le fait que l'interface 320, l'interface 322 et l'unité de traitement 321 soient configurées de manière à être pleinement actives est représenté par des carrés blancs sur la Fig. 4B. Le second dispositif pont 112 est alors en mode de fonctionnement nominal.

La reconnexion du second dispositif pont 112 au réseau de communication sans-fil 121 est détectée par l'interface 312 du premier dispositif pont 111, puisque l'interface 312 était restée à l'écoute d'une reconnexion du second dispositif pont 112 au réseau de communication sans-fil 121. L'interface 312 est alors reconfigurée de manière à être pleinement active. Il s'en suit que l'unité de traitement 311 et l'interface 310 sont aussi reconfigurées de manière à être pleinement actives, ce qui entraîne la réactivation du premier lien filaire 120. Cette situation est représentée sur la Fig. 4C. Le fait que l'interface 310, l'interface 312 et l'unité de traitement 311 soient configurées de manière à être pleinement actives est représenté par des carrés blancs sur la Fig. 4C. Le premier dispositif pont 111 est alors en mode de fonctionnement nominal.

Le passage en mode de fonctionnement nominal du premier dispositif pont 111 est détecté par l'interface 302 dudit dispositif fournisseur 110 via le premier lien filaire 120, puisque l'interface 302 dudit dispositif fournisseur 110 était restée à l'écoute d'un retour d'activité du premier dispositif pont 111 via le premier lien filaire 120. Par exemple, selon le mécanisme Energy Detect+, la reconfiguration de l'interface 310 de manière à être pleinement active entraine une procédure de négociation de lien démarrant par l'émission de signaux NLP. L'interface 302 et l'unité de traitement 301 dudit dispositif fournisseur 110 sont alors reconfigurées de manière à être pleinement actives. Ainsi, ledit dispositif fournisseur 110 est en mode de fonctionnement nominal. Le système de transmission de données se retrouve alors dans l'état de fonctionnement nominal, c'est-à-dire dans la configuration illustrée par la Fig. 3A.

Les Figs. 5A à 5D illustrent schématiquement un premier scénario dans lequel le système de transmission de données passe de l'état de fonctionnement nominal à un état d'hibernation.

La Fig. 5A illustre schématiquement le système de transmission de données dans un état de fonctionnement dans lequel ledit dispositif consommateur 113 a reçu une commande d'hibernation alors que le système de transmission de données se trouvait dans un état de fonctionnement nominal tel qu'illustré sur la Fig. 3A. Une telle commande est par exemple reçue suite à une action utilisateur sur un bouton dédié dudit dispositif consommateur 113 ou d'une télécommande associée audit dispositif consommateur 113. Il s'ensuit une mise en mode d'économie d'énergie dudit dispositif consommateur 113. L'interface 332 et, si possible, l'unité de traitement 331 sont alors reconfigurées de manière à être actives à performance réduite. Le second lien filaire 122 a alors des performances réduites, l'interface 332 restant à l'écoute d'un réveil par l'interface 320 du second dispositif pont 112. Le fait que l'interface 332 et de l'unité de traitement 331 soient configurées de manière à être actives à performance réduite est représenté grâce à des carrés hachurés sur la Fig. 5A.

La mise en mode d'économie d'énergie du dispositif consommateur 113 est détectée par le second dispositif pont 112. Selon un premier exemple, le second dispositif pont 112 émet régulièrement un message de sonde à destination dudit dispositif consommateur 113, *e.g.* message de type *ping*, pour tester si ledit dispositif consommateur 113 a été mis en hibernation. Selon un second exemple, lorsque ledit dispositif fournisseur 110 et ledit dispositif consommateur 113 mettent en oeuvre le standard UPnP (« Universal Plug n' Play » en anglais) Low Power tel que défini dans les spécifications « UPnP Low Power Architecture v1.0 », le second dispositif pont 112 détecte que ledit dispositif consommateur 113 a été mis hibernation par analyse du trafic UPnP Low Power entre le dispositif fournisseur 110 et le dispositif consommateur 113. Notamment, le second dispositif pont 112 cherche à détecter les messages de type « Bye-bye » avec une information appelée *powerstate* paramétrée à une valeur appelée « Deep Sleep Online ». Selon un troisième exemple, le second dispositif pont 112 reçoit dudit dispositif consommateur 113 un message indiquant la mise en hibernation dudit dispositif consommateur 113, et ce, avant d'effectivement appliquer la mise en hibernation.

Le second dispositif pont 112 reconfigure alors l'interface 320, l'interface 322 et l'unité de traitement 321 de manière à être actives à performance réduite. Une telle reconfiguration de l'interface 320 permet au second dispositif pont 112 de rester à l'écoute d'un retour en mode de fonctionnement nominal dudit dispositif consommateur 113. Une telle reconfiguration de l'interface 322 permet au second dispositif pont 112 de rester à l'écoute de demandes de mise en mode de fonctionnement nominal dudit dispositif consommateur 113 qui viendrait du réseau de communication sans-fil 121. Cette situation est représentée sur la Fig. 5B. Le fait que l'interface 320, l'interface 322 et l'unité de traitement 321 soient configurées de manière à être actives à performance réduite est représenté par des carrés hachurés sur la Fig. 5B. Le second dispositif pont 112 est alors en mode d'économie d'énergie.

La mise en mode d'économie d'énergie de l'interface 322 du second dispositif pont 112 est détectée par l'interface 312 du premier dispositif pont 111. Par exemple, dans le cas d'un réseau Wi-Fi, le premier dispositif pont détecte le passage du second dispositif pont 112 du mode CAM ou mode PSPM. L'interface 312 est alors reconfigurée de manière à être active à performance réduite, afin de permettre de détecter un retour en mode de fonctionnement nominal du second dispositif pont 112. Il s'en suit une reconfiguration de l'interface 310 et de l'unité de traitement 311 de manière à être actives à performance réduite. Le premier lien filaire 120 a alors des performances réduites, l'interface 310 restant à l'écoute d'un réveil par l'interface 302 dudit dispositif fournisseur 110. Le fait que l'interface 310, l'interface 312 et l'unité de traitement 311 soient configurées de manière à être actives à performance réduite est représenté grâce à des carrés hachurés sur la Fig. 5C. Le premier dispositif pont 111 est alors en mode d'économie d'énergie.

La mise en mode d'économie d'énergie du premier dispositif pont 111 est détectée par l'interface 302 dudit dispositif fournisseur 110. Par exemple, comme déjà indiqué, dans le cadre du standard IEEE 802.3az, le passage en mode d'économie d'énergie est signifié par l'envoi régulier du signal LPI. L'interface 302 est alors reconfigurée de manière à être active à performance réduite, afin de permettre de détecter un retour d'activité du premier dispositif pont 111. Il s'en suit une reconfiguration de l'unité de traitement 301 de manière à être active à performance réduite. Le fait que l'interface 302 et l'unité de traitement 301 soient configurées de manière à être active à performance réduite est représenté grâce à des carrés hachurés sur la Fig. 5D. Le dispositif fournisseur 110 est alors en mode d'économie d'énergie. Le système de transmission de données est alors configuré de manière optimisée en termes de consommation énergétique et est apte à se réveiller dans le cas où la transmission de données depuis ledit dispositif fournisseur 110 vers ledit dispositif consommateur 113 doive reprendre en régime nominal (*e.g.* transmission de données vidéo).

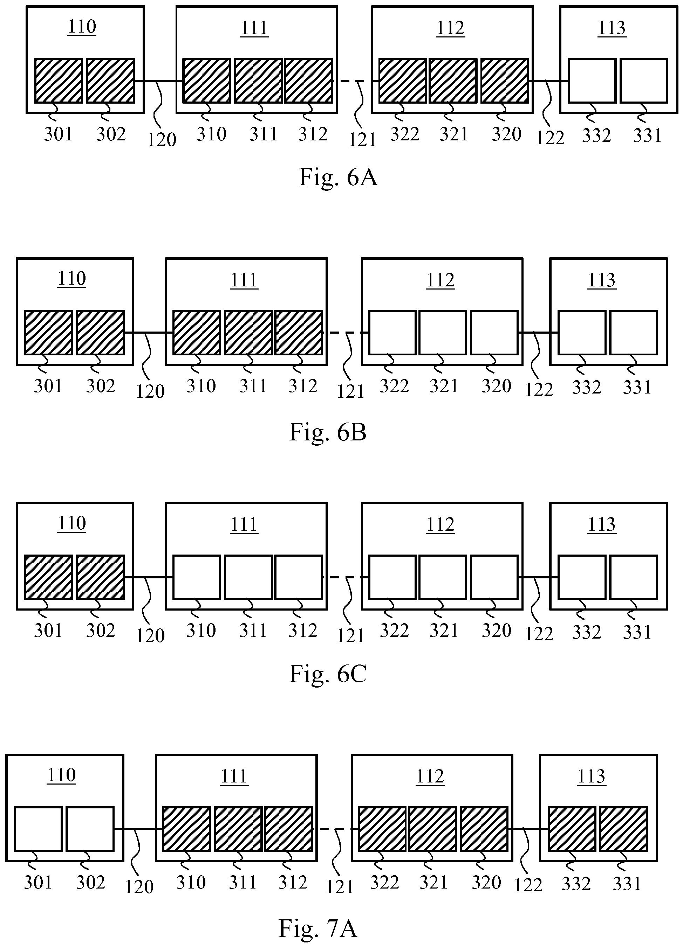

Les Figs. 6A à 6C illustrent schématiquement un premier scénario dans lequel le système de transmission de données passe d'un état d'hibernation à l'état de fonctionnement nominal.

Le système de transmission de données se trouve dans un état d'hibernation, tel que représenté sur la Fig. 5D, lorsque ledit dispositif consommateur 113 reçoit une commande d'allumage. Une telle commande est par exemple reçue suite à une action utilisateur sur un bouton dédié dudit dispositif consommateur 113 ou d'une télécommande associée audit dispositif consommateur 113. Il s'ensuit une reconfiguration de l'interface 332 et de l'unité de traitement 331 de manière à être pleinement actives. Cette situation est représentée sur la Fig. 6A. Le fait que l'interface 332 et l'unité de traitement 331 soient configurées de manière à être pleinement actives est représenté par des carrés blancs sur la Fig. 6A. Ledit dispositif consommateur 113 est alors en mode de fonctionnement nominal.

Le retour en mode de fonctionnement nominal dudit dispositif consommateur 113 est détecté par l'interface 320 du second dispositif pont 112 via le second lien filaire 122, puisque l'interface 320 était restée à l'écoute d'un retour d'activité dudit dispositif consommateur 113 via le second lien filaire 122. Par exemple, comme déjà indiqué, selon le mécanisme Energy Detect+, la reconfiguration de l'interface 332 de manière à être pleinement active entraine une procédure de négociation de lien démarrant par l'émission de signaux NLP. Dans un autre exemple, le trafic généré par le dispositif consommateur 113 sortant de son hibernation permet la détection du retour en mode de fonctionnement nominal du dispositif consommateur 113. L'interface 320 et l'unité de traitement 321 sont alors reconfigurées de manière à être pleinement actives. L'interface 322 est alors aussi reconfigurée de manière à être pleinement active. Cette situation est représentée sur la Fig. 6B. Le fait que l'interface 320, l'interface 322 et l'unité de traitement 321 soient configurées de manière à être pleinement actives est représenté par des carrés blancs sur la Fig. 6B. Le second dispositif pont 112 est alors en mode d'économie d'énergie.

Le retour en mode de fonctionnement nominal du second dispositif pont 112 est détecté par l'interface 312 du premier dispositif pont 111 via le réseau de communication sans-fil 121. Il est par exemple possible de s'appuyer sur des paquets émis par le dispositif consommateur 113 qui, suite à son initialisation, cherche à se prendre contact avec le dispositif fournisseur 110. Il est aussi possible que le second dispositif pont 112 envoie un message spécifique au premier dispositif pont 111 pour indiquer le passage du mode PSPM au mode CAM. L'interface 312 est alors reconfigurée de manière à être pleinement active. L'unité de traitement 311 est aussi reconfigurée de manière à être pleinement active, ainsi que l'interface 310. Cette situation est représentée sur la Fig. 6C. Le fait que l'interface 310, l'interface 312 et l'unité de traitement 311 soient configurée de manière à être pleinement actives est représenté par des carrés blancs sur la Fig. 6C. Le premier dispositif pont 111 est alors en mode de fonctionnement nominal.

Le retour en mode de fonctionnement nominal du premier dispositif pont 111 est détecté par l'interface 302 dudit dispositif fournisseur 110 via le lien 120, puisque l'interface 302 dudit dispositif fournisseur 110 était restée à l'écoute d'un retour d'activité du premier dispositif pont 111 via le premier lien filaire 120. Par exemple, comme déjà indiqué, selon le mécanisme Energy Detect+, la reconfiguration de l'interface 310 de manière à être pleinement active entraine une procédure de négociation de lien démarrant par l'émission de signaux NLP. Dans un autre exemple, la reconfiguration des interfaces 310 et 302 de manière à être pleinement actives peut s'appuyer sur le standard IEEE 802.3az en conséquence du trafic généré par le dispositif consommateur 113 et traversant ces interfaces. L'interface 302 et, au besoin, l'unité de traitement 301 sont alors reconfigurées de manière à être pleinement actives. Ledit dispositif fournisseur 110 est alors en mode de fonctionnement nominal. Le système de transmission de données se retrouve alors en état de fonctionnement nominal, c'est-à-dire dans la configuration illustrée par la Fig. 3A.

Les Figs. 7A à 7C illustrent schématiquement un second scénario dans lequel le système de transmission de données passe d'un état d'hibernation à l'état de fonctionnement nominal.

Le système de transmission de données se trouve dans un état d'hibernation, tel que représenté sur la Fig. 5D, lorsque ledit dispositif fournisseur 110 reçoit une instruction ou une commande entraînant une émission par ledit dispositif fournisseur 110 d'une demande de mise en mode de fonctionnement nominal dudit dispositif consommateur 113. Par exemple, une telle demande de mise en mode de fonctionnement nominal dudit dispositif consommateur 113 prend la forme d'un paquet magique (« magic packet » en anglais) selon le standard « Wake On LAN ». Ce paquet magique est une trame Ethernet contenant les octets FF FF FF FF FF FF (en hexadécimal) suivis de seize répétitions de l'adresse MAC dudit dispositif consommateur 113. Suite à cette instruction ou commande, l'unité de traitement 301 et l'interface 302 sont reconfigurées de manière à être pleinement actives. Cette situation est représentée sur la Fig. 7A. Le fait que l'interface 302 et l'unité de traitement 301 soient configurées de manière à être pleinement actives est représenté par des carrés blancs sur la Fig. 7A. Le dispositif fournisseur 110 est alors en mode de fonctionnement nominal.

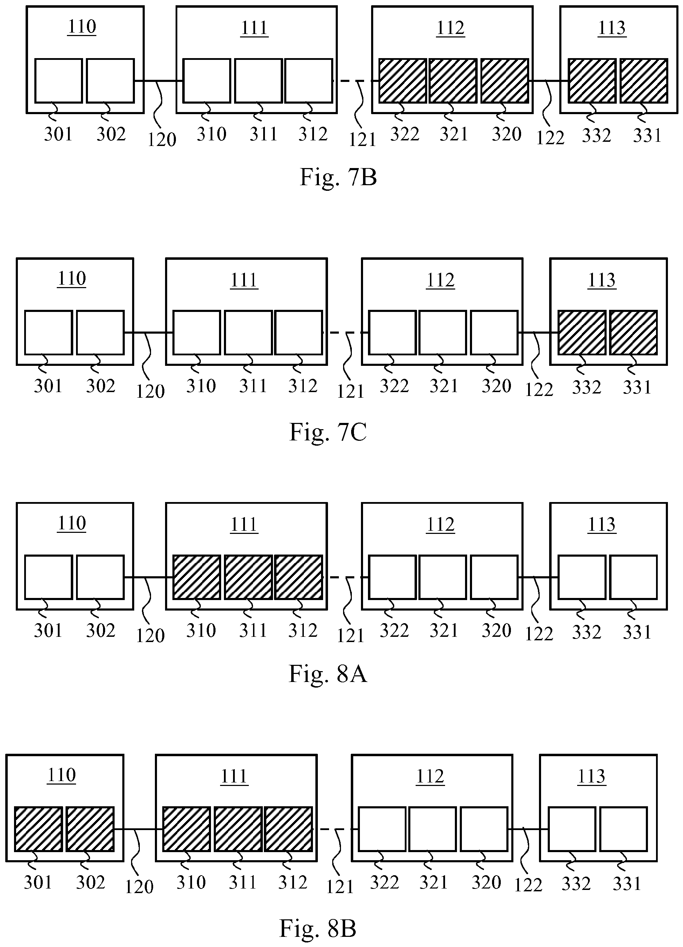

Le retour en mode de fonctionnement nominal dudit dispositif fournisseur 110 est détecté par l'interface 310 du premier dispositif pont 111 via le lien 120, puisque l'interface 310 était restée à l'écoute d'un retour en mode de fonctionnement nominal dudit dispositif fournisseur 110 via le premier lien filaire 120. Par exemple, comme déjà indiqué, selon le mécanisme Energy Detect+, la reconfiguration de l'interface 302 de manière à être pleinement active entraine une procédure de négociation de lien démarrant par l'émission de signaux NLP. L'interface 310 et, si possible, l'unité de traitement 311 sont alors reconfigurées de manière à être pleinement actives. Le premier dispositif pont 111 reçoit alors la demande de mise en mode de fonctionnement nominal dudit dispositif consommateur 113. L'interface 312 est alors reconfigurée de manière à être pleinement active. Cette situation est représentée sur la Fig. 7B. Le fait que l'interface 310, l'interface 312 et l'unité de traitement 311 soient configurées de manière à être pleinement actives est représenté par des carrés blancs sur la Fig. 7B. Le premier dispositif pont 111 est alors en mode de fonctionnement nominal.

Le retour en mode de fonctionnement nominal du premier dispositif pont 111 est détecté par l'interface 320 du second dispositif pont 112 via le réseau de communication sans-fil 121. En considérant que le réseau de communication sans-fil 121 est de type Wi-Fi, le premier dispositif pont 111 met à jour l'information TIM déjà mentionnée, en indiquant qu'un message (la demande de mise en mode de fonctionnement nominal dudit dispositif consommateur 113) est en attente de la disponibilité du second dispositif pont 112. Lors d'une vérification périodique effectuée par le second dispositif pont 112 via l'interface 322, ledit second dispositif pont 112 détecte que l'information TIM indique qu'un message est en attente du second dispositif pont 112. L'interface 322 et l'unité de traitement 321 sont alors reconfigurées de manière à être pleinement actives. Le second dispositif pont 112 reçoit alors la demande de la demande de mise en mode de fonctionnement nominal dudit dispositif consommateur 113. De plus, l'interface 320 est reconfigurée de manière à être pleinement active. Cette situation est représentée sur la Fig. 7C. Le fait que l'interface 320, l'interface 322 et l'unité de traitement 321 soient configurées de manière à être pleinement actives est représenté par des carrés blancs sur la Fig. 7C. Le second dispositif pont 112 est alors en mode de fonctionnement nominal.

Le retour en mode de fonctionnement nominal du second dispositif pont 112 est détecté par l'interface 332 dudit dispositif consommateur 113 via le second lien filaire 122 grâce à la réception par l'interface 332 de la demande de mise en mode de fonctionnement nominal adressée audit dispositif consommateur 113, puisque l'interface 332 était restée à l'écoute d'un retour d'activité du second dispositif pont 112 via le second lien filaire 122. L'interface 332 et l'unité de traitement 331 sont alors reconfigurées de manière à être pleinement actives. Ledit dispositif consommateur 113 est alors en mode de fonctionnement nominal. Le système de transmission de données se retrouve alors en état de fonctionnement nominal, c'est-à-dire dans la configuration illustrée par la Fig. 3A.

Les Figs. 8A à 8C illustrent schématiquement un second scénario dans lequel le système de transmission de données passe de l'état de fonctionnement nominal à un état d'hibernation.

Le premier dispositif pont 111 et le second dispositif pont 112 sont adaptés pour analyser le volume de trafic de données entre ledit dispositif fournisseur 110 et ledit dispositif consommateur 113. Lorsque le volume de trafic depuis ledit dispositif fournisseur 110 vers ledit dispositif consommateur 113 est inférieur ou égal à un premier seuil TH1 pendant une fenêtre temporelle prédéfinie et lorsque le volume de trafic depuis ledit dispositif consommateur 113 vers ledit dispositif fournisseur 110 est inférieur ou égal à un second seuil TH2 pendant ladite fenêtre temporelle prédéfinie, le premier dispositif pont 111 et le second dispositif pont 112 déclenchent une mise en hibernation du système de transmission de données. Les premier TH1 et second TH2 seuils peuvent être fixés à 0, et peuvent être différents pour le premier dispositif pont 111 et le second dispositif pont 112. Fixer les premier TH1 et second TH2 seuils à une valeur non nulle permet de s'affranchir d'échanges (comme des données de diffusion ou des données de maintenance) liés au maintien en place du système de transmission de données sans-fil. L'analyse du volume de trafic de données peut aussi se faire par mise en oeuvre de seuils de déclenchement respectifs dans des files d'attente de la fonction de pont desdits premier 111 et second 112 dispositifs ponts. Lorsque une file d'attente contient des données en attente au delà du seuil de déclenchement de ladite file d'attente, il est considéré que le volume de trafic nécessité un retour au mode de fonctionnement nominal.

Le système de transmission de données se trouve initialement dans l'état de fonctionnement nominal, tel que représenté sur la Fig. 3A. Considérons que le premier dispositif pont 111 détecte un faible niveau (*i.e.* inférieur ou égal à un seuil prédéfini) de trafic bidirectionnel entre ledit dispositif fournisseur 110 et ledit dispositif consommateur 113. L'unité de traitement 311, l'interface 310 et l'interface 312 sont alors reconfigurées de manière à être actives à performance réduite. Cette situation est représentée sur la Fig. 8A. Le fait que l'interface 310, l'interface 312 et l'unité de traitement 311 soient configurées de manière à être actives à performance réduite est représenté par des carrés hachurés sur la Fig. 8A. Le premier dispositif pont 111 est alors en mode d'économie d'énergie.

Le passage en mode d'économie d'énergie du premier dispositif pont 111 est détecté par l'interface 302 dudit dispositif fournisseur 110. Par exemple, comme déjà indiqué, dans le cadre du standard IEEE 802.3az, le passage en mode d'économie d'énergie est signifié par l'envoi régulier du signal LPI. L'interface 302 est alors reconfigurée de manière à être active à performance réduite, afin de permettre de détecter un retour d'activité du premier dispositif pont 111 via le premier lien filaire 120. L'unité de traitement 301 est aussi reconfigurée de manière à être active à performance réduite. Le fait que l'interface 302 et l'unité de traitement 301 soient configurées de manière à être actives à performance réduite est représenté grâce à des carrés hachurés sur la Fig. 8B. Ledit dispositif fournisseur 110 est alors en mode d'économie d'énergie.

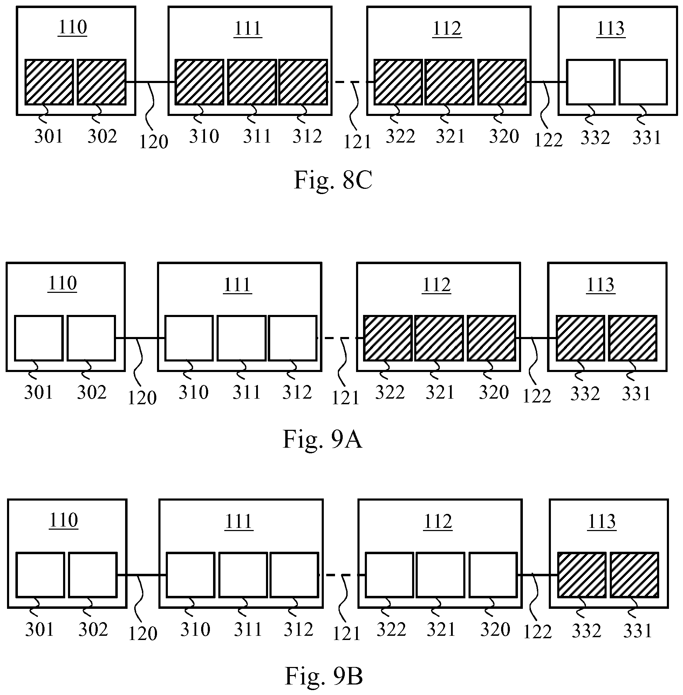

Le second dispositif pont 112 détecte aussi le faible niveau de trafic bidirectionnel entre ledit dispositif fournisseur 110 et ledit dispositif consommateur 113. L'unité de traitement 321, l'interface 320 et l'interface 322 sont alors reconfigurées de manière à être actives à performance réduite. Cette situation est représentée sur la Fig. 8C. Le fait que l'interface 320, l'interface 322 et l'unité de traitement 321 soient configurées de manière à être actives à performance réduite est représenté par des carrés hachurés sur la Fig. 8C. Le second dispositif pont 112 est alors en mode d'économie d'énergie.

Le passage en mode d'économie d'énergie du second dispositif pont 112 est détectée par l'interface 332 dudit dispositif consommateur 113. Par exemple, comme déjà indiqué, dans le cadre du standard IEEE 802.3az, le passage en mode d'économie d'énergie est signifié par l'envoi régulier du signal LPI. L'interface 332 est alors reconfigurée de manière à être active à performance réduite, afin de permettre un éventuel réveil ultérieur de l'interface 332 par le second dispositif pont 112. L'unité de traitement 331 est aussi reconfigurée de manière à être active à performance réduite. Ledit dispositif consommateur 113 est alors en mode d'économie d'énergie. Le système de transmission de données est alors en état d'hibernation, tel que représenté sur la Fig. 5D.

Il convient de noter que le second dispositif pont 112 peut détecter avant, ou en même temps que, le première dispositif 111 le faible volume de trafic de données entre ledit dispositif fournisseur 110 et ledit dispositif consommateur 113.

Les Figs. 9A et 9B illustrent schématiquement un troisième scénario dans lequel le système de transmission de données passe d'un état d'hibernation à l'état de fonctionnement nominal.

Comme pour le scénario décrit en relation avec les Figs. 8A à 8C, le premier dispositif pont 111 et le second dispositif pont 112 sont adaptés pour analyser le volume de trafic de données entre ledit dispositif fournisseur 110 et ledit dispositif consommateur 113. Lorsque le volume de trafic depuis ledit dispositif fournisseur 110 vers ledit dispositif consommateur 113 est inférieur ou égal au premier seuil TH1 pendant une fenêtre temporelle prédéfinie et/ou lorsque le volume de trafic depuis ledit dispositif consommateur 113 vers ledit dispositif fournisseur 110 est inférieur ou égal au second seuil TH2 pendant ladite fenêtre temporelle prédéfinie, le premier dispositif pont 111 et le second dispositif pont 112 déclenchent un réveil (sortie d'hibernation) du système de transmission de données.

Le système de transmission de données se trouve dans l'état d'hibernation, tel que représenté sur la Fig. 5D. Considérons que le premier dispositif pont 111 détecte un retour à un fort niveau de trafic sur au moins une des deux directions entre ledit dispositif fournisseur 110 et ledit dispositif consommateur 113. Ce fort niveau de trafic ne peut provenir que de l'interface 310 dans notre hypothèse engendrant au préalable une reconfiguration de l'unité de traitement 301 et de l'interface 302 du dispositif fournisseur 110. Suite à la détection de trafic par le premier dispositif de pont 111, l'interface 310, l'unité de traitement 311 et l'interface 312 sont alors reconfigurées de manière à être pleinement actives. Cette situation est représentée sur la Fig. 9A. Le fait que l'unité de traitement 301, l'interface 302, l'interface 310, l'interface 312 et l'unité de traitement 311 soient reconfigurées de manière à être pleinement actives est représenté par des carrés blancs sur la Fig. 9A. Le dispositif fournisseur 110 et le premier dispositif pont 111 sont alors en mode de fonctionnement nominal.

Le second dispositif pont 112 détecte aussi le retour à un fort niveau de trafic bidirectionnel entre ledit dispositif fournisseur 110 et ledit dispositif consommateur 113. L'interface 320 est alors reconfigurée de manière à être pleinement active. L'unité de traitement 321 et l'interface 322 sont aussi reconfigurées de manière à être pleinement actives. Cette situation est représentée sur la Fig. 9B. Le fait que l'interface 320, l'interface 322 et l'unité de traitement 321 soient configurées de manière à être pleinement actives est représenté par des carrés blancs sur la Fig. 9B.

Le retour en mode de fonctionnement nominal du second dispositif pont 112 est détecté par l'interface 332 dudit dispositif consommateur 113 via le second lien filaire 122, puisque l'interface 332 dudit dispositif consommateur 113 était restée à l'écoute d'un retour d'activité du second dispositif pont 112 via le second lien filaire 122. Par exemple, comme déjà indiqué, selon le mécanisme Energy Detect+, la reconfiguration de l'interface 322 de manière à être pleinement active entraine une procédure de négociation de lien démarrant par l'émission de signaux NLP. L'interface 332 et l'unité de traitement 331 dudit dispositif consommateur 113 sont alors reconfigurées de manière à être pleinement actives. Ledit dispositif consommateur 113 est alors en mode de fonctionnement nominal. Le système de transmission de données se retrouve alors en fonctionnement nominal, c'est-à-dire dans la configuration illustrée par la Fig. 3A.

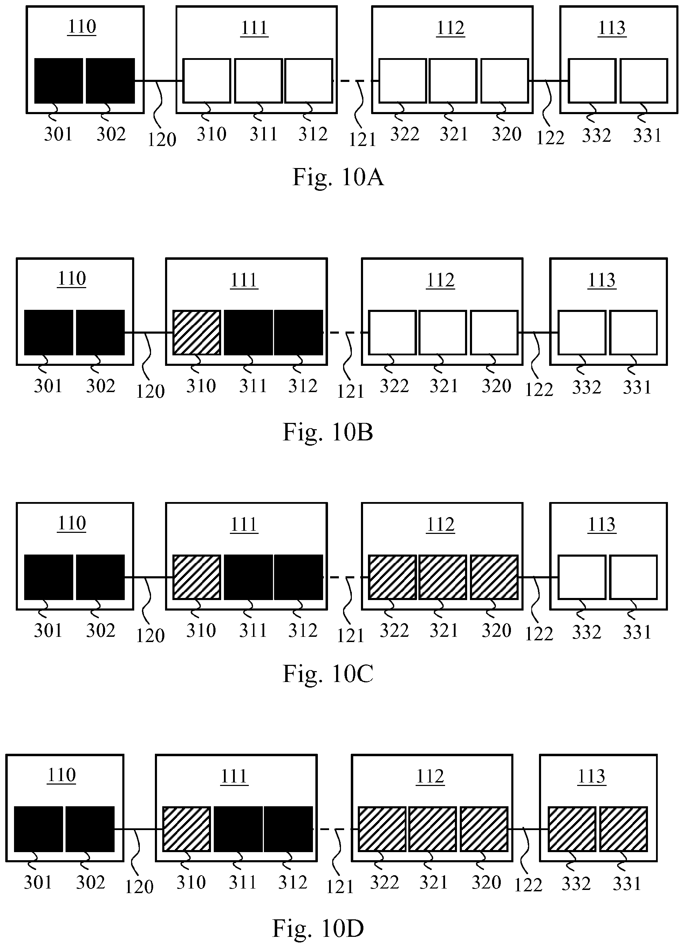

Les Figs. 10A à 10D illustrent schématiquement un second scénario dans lequel le système de transmission de données passe d'un état de fonctionnement nominal à un état d'extinction partielle.

La Fig. 10A illustre schématiquement le système de transmission de données dans un état de fonctionnement dans lequel ledit dispositif fournisseur 110 a reçu une commande d'arrêt alors que le système de transmission de données se trouvait dans un état de fonctionnement nominal tel qu'illustré sur la Fig. 3A. Une telle commande est par exemple reçue suite à une action utilisateur sur un bouton dédié dudit dispositif fournisseur 110 ou d'une télécommande associée audit dispositif fournisseur 110. Il s'ensuit que ledit dispositif fournisseur 110 passe en mode d'arrêt, en désactivant l'interface 302, ainsi que l'unité de traitement 331. Le premier lien filaire 120 devient alors inactif. Le fait que l'interface 302 et de l'unité de traitement 301 soient désactivées est représenté grâce à des carrés noirs sur la Fig. 10A.

Le passage en mode d'arrêt dudit dispositif fournisseur 110 est détecté par l'interface 320 du second dispositif pont 112, puisque le premier lien filaire 120 est devenu inactif. L'interface 310 est alors reconfigurée de manière à être active à performance réduite, après éventuellement l'expiration d'une temporisation de durée prédéfinie. Cette reconfiguration de l'interface 310 permet de réaliser une économie d'énergie, tout en conservant la capacité de détecter un retour d'activité dudit dispositif fournisseur 110 par réactivation du premier lien filaire 120, telle que par exemple décrite dans les mécanismes Energy Detect, Energy Detect+ ou selon le standard IEEE 802.3az. Il s'en suit une désactivation de l'interface 312 et une désactivation de l'unité de traitement 311. La réactivation de l'unité de traitement 311 peut ultérieurement être réalisée grâce à un signal de réveil en provenance de l'interface 310. Le premier dispositif pont 111 déconnecte alors le réseau de communication sans-fil 121. Le fait que l'interface 312 et de l'unité de traitement 311 soient désactivées est représenté grâce à des carrés noirs sur la Fig. 10B, et le fait que l'interface 310 soit active à performance réduite est représenté grâce à un carré hachuré sur la Fig. 10B. Ainsi, le premier dispositif pont 111 est en mode d'arrêt.

La déconnexion du réseau de communication sans-fil 121 est détectée par l'interface 322 du second dispositif pont 112. L'interface 322 est alors reconfigurée de manière à être active à performance réduite, afin de permettre de détecter une reconnexion ultérieure du réseau de communication sans-fil 121. Il s'en suit une reconfiguration de l'interface 320 du second dispositif pont 112 et une reconfiguration de l'unité de traitement 321 de manière à être actives à performance réduite. Le fait que l'interface 320, l'interface 322 et l'unité de traitement 321 soient configurées de manière à être actives à performance réduite est représenté grâce à des carrés hachurés sur la Fig. 10C. Ainsi, le second dispositif pont 112 est en mode d'économie d'énergie.

Le passage en mode d'économie d'énergie du second dispositif pont 112 est détectée par l'interface 332 dudit dispositif consommateur 113. L'interface 332 est alors reconfigurée de manière à être active à performance réduite, afin de permettre de détecter un retour d'activité du second dispositif pont 112 via le second lien filaire 122. Le second lien filaire 122 reste donc actif. Il s'en suit une reconfiguration de l'unité de traitement 331 de manière à être active à performance réduite. Le fait que l'interface 332 et l'unité de traitement 331 soient reconfigurées de manière à être actives à performance réduite est représenté grâce à des carrés hachurés sur la Fig. 10D. Ainsi, ledit dispositif consommateur 113 est en mode d'économie d'énergie. Le système de transmission de données est alors dans un état d'extinction partielle. Le système de transmission de données est alors configuré de manière optimisée en termes de consommation énergétique et est apte à se réveiller au retour d'activité dudit dispositif fournisseur 110.

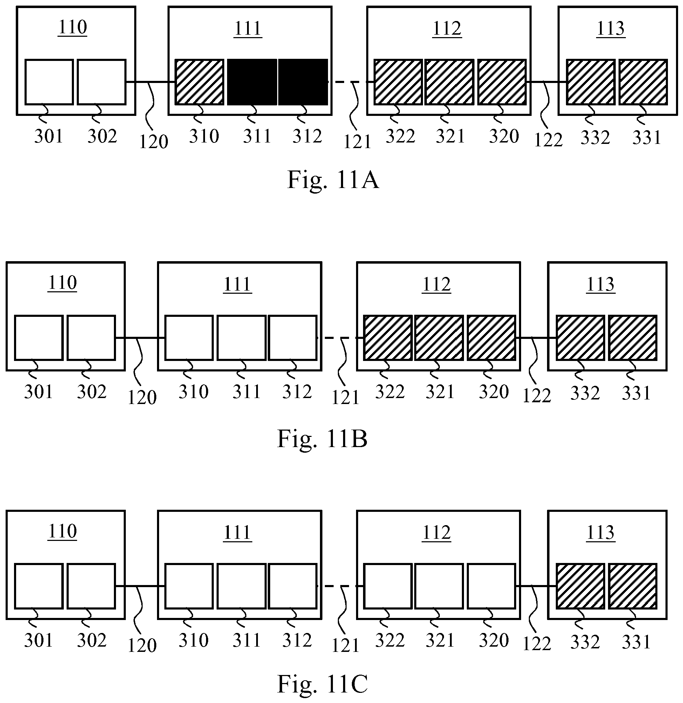

Les Figs. 11A à 11C illustrent schématiquement un second scénario dans lequel le système de transmission de données passe d'un état d'extinction partielle à l'état de fonctionnement nominal.

Le système de transmission de données se trouve dans l'état d'extinction partielle représenté sur la Fig. 10D, lorsque ledit dispositif fournisseur 110 reçoit une commande d'allumage. Une telle commande est par exemple reçue suite à une action utilisateur sur un bouton dédié dudit dispositif fournisseur 110 ou d'une télécommande associée audit dispositif fournisseur 110. Il s'ensuit une reconfiguration de l'interface 302 et de l'unité de traitement 301 de manière à être pleinement actives. Cette situation est représentée sur la Fig. 11A. Le fait que l'interface 302 et l'unité de traitement 301 soient configurées de manière à être pleinement actives est représenté par des carrés blancs sur la Fig. 11A. Ainsi, ledit dispositif fournisseur 110 est en mode de fonctionnement nominal.

Le passage en mode de fonctionnement nominal dudit dispositif fournisseur 110 est détecté par l'interface 310 du premier dispositif pont 111 via le premier lien filaire 120, puisque l'interface 310 était restée à l'écoute d'une réactivation du premier lien filaire 120 par l'interface 302. Par exemple, la reconfiguration de l'interface 302 de manière à être pleinement active entraine une procédure de négociation de lien démarrant par l'émission de signaux NLP. Cette activité est par exemple détectée par l'interface 310 selon les mécanismes Energy Detect, Energy Detect+ ou selon le standard IEEE 802.3az. L'interface 310 est alors reconfigurée de manière à être pleinement active et l'interface 310 réveille l'unité de traitement 311 pour que l'unité de traitement 311 soit reconfigurée de manière à être pleinement active. L'interface 312 est alors reconfigurée de manière à être pleinement active et le premier dispositif pont 111 reconnecte le réseau de communication sans-fil 121. Cette situation est représentée sur la Fig. 11B. Le fait que l'interface 310, l'interface 312 et l'unité de traitement 311 soient configurées de manière à être pleinement actives est représenté par des carrés blancs sur la Fig. 11B. Le premier dispositif pont 111 est alors en mode de fonctionnement nominal.

La reconnexion du réseau de communication sans-fil 121 est détectée par l'interface 322 du second dispositif pont 112, puisque l'interface 322 était restée à l'écoute d'une reconnexion du réseau de communication sans-fil 121. L'interface 322 est alors reconfigurée de manière à être pleinement active. Il s'en suit que l'unité de traitement 321 et l'interface 320 sont aussi reconfigurées de manière à être pleinement actives, ce qui entraîne la réactivation du second lien filaire 122. Cette situation est représentée sur la Fig. 11C. Le fait que l'interface 320, l'interface 322 et l'unité de traitement 321 soient configurées de manière à être pleinement actives est représenté par des carrés blancs sur la Fig. 11C. Le second dispositif pont 112 est alors en mode de fonctionnement nominal.

Le passage en mode de fonctionnement nominal du second dispositif pont 112 est détecté par l'interface 332 dudit dispositif consommateur 113 via le second lien filaire 122, puisque l'interface 332 dudit dispositif consommateur 113 était restée à l'écoute d'un retour d'activité du second dispositif pont 112 via le second lien filaire 122. Par exemple, comme déjà indiqué, selon le mécanisme Energy Detect+, la reconfiguration de l'interface 320 de manière à être pleinement active entraine une procédure de négociation de lien démarrant par l'émission de signaux NLP. L'interface 332 et l'unité de traitement 331 sont alors reconfigurées de manière à être pleinement actives. Ainsi, ledit dispositif consommateur 113 est en mode de fonctionnement nominal. Le système de transmission de données se retrouve alors dans l'état de fonctionnement nominal, c'est-à-dire dans la configuration illustrée par la Fig. 3A.

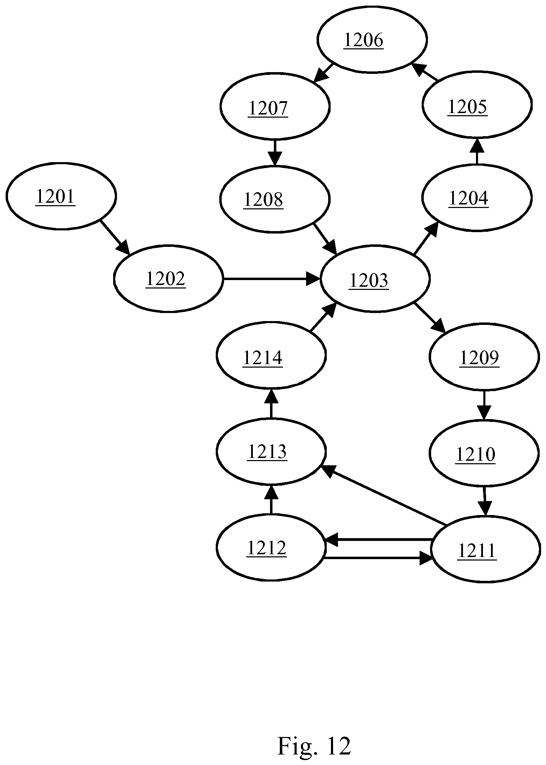

La Fig. 12 illustre schématiquement une machine d'états mise en oeuvre par le second dispositif pont 112 pour réaliser les scénarii précédents.

La machine d'état de la Fig. 12 débute dans un état 1201 dans lequel le second dispositif pont 112 est initialisé. Un appairage entre le premier dispositif pont 111 et le second dispositif pont 112 peut être mis en oeuvre lors de l'initialisation du second dispositif pont 112. Une fois l'initialisation terminée et lorsque le réseau de communication sans-fil 121 est de type Wi-Fi, le second dispositif pont 112 passe dans un état 1202 dans lequel le second dispositif pont 112 détermine quelle configuration Wi-Fi est à appliquer lorsque l'interface 322 est active à performance réduite, grâce à des mesures de niveau de signal reçu (du premier dispositif pont 111) et à des tests d'écoute. Le second dispositif pont 112 passe ensuite dans un état 1203 dans lequel le second dispositif pont 112 est en mode de fonctionnement nominal. Le second dispositif pont 112 évalue alors le volume de trafic bidirectionnel entre ledit dispositif fournisseur 110 et ledit dispositif consommateur 113.

Lorsque le second dispositif pont 112 détecte une désactivation du second lien filaire 122 et que le second dispositif pont 112 est dans l'état 1203, le second dispositif pont 112 passe dans un état 1204. Lorsque le second dispositif pont 112 détecte une mise en mode d'économie d'énergie du dispositif consommateur 113 ou un faible niveau de trafic bidirectionnel entre ledit dispositif fournisseur 110 et ledit dispositif consommateur 113, le second dispositif pont 112 passe dans un état 1209.

Dans l'état 1204, le second dispositif pont 112 désactive l'interface 322 (qui permet de connecter le second dispositif pont 112 au réseau de communication sans-fil 121). Ensuite, le second dispositif pont 112 passe dans un état 1205 dans lequel désactive, si possible, l'unité de traitement 321. Ensuite, le second dispositif pont 112 passe dans un état 1206 dans lequel l'interface 320 (qui permet de connecter le second dispositif pont 112 audit dispositif consommateur 113) est configurée de manière à être active à performance réduite. Le second dispositif pont 112 est alors en mode d'arrêt.

Lorsque le second dispositif pont 112 détecte une réactivation du second lien filaire 122 et que le second dispositif pont 112 est dans l'état 1206, le second dispositif pont 112 passe dans un état 1207 dans lequel l'interface 320 et l'unité de traitement 321 sont configurées de manière à être pleinement actives. Le second dispositif pont 112 passe alors dans un état 1208 dans lequel le second dispositif pont 112 reconfigure l'interface 322 de manière à être pleinement active. Puis, le second dispositif pont 112 retourne à l'état 1203, c'est-à-dire que le second dispositif pont 112 retourne en mode de fonctionnement nominal.

Dans l'état 1209, le second dispositif pont 112 configure l'interface 322 (qui permet de connecter le second dispositif pont 112 au réseau de communication sans-fil 121) de manière à être active à performance réduite. Ensuite, le second dispositif pont 112 passe dans un état 1210 dans lequel le second dispositif pont 112 configure, si possible, l'unité de traitement 321 de manière à être active à performance réduite. Ensuite, le second dispositif pont 112 passe dans un état 1211 dans lequel l'interface 320 est configurée de manière à être active à performance réduite. Le second dispositif pont 112 est alors en mode d'économie d'énergie.

Lorsque le second dispositif pont 112 reçoit des données en provenance du second lien filaire 122 ou en provenance du réseau de communication sans-fil 121 et que le second dispositif pont 112 est dans l'état 1211, le second dispositif pont 112 passe dans un état 1212 dans lequel le second dispositif pont 112 évalue le volume de trafic bidirectionnel entre ledit dispositif fournisseur 110 et ledit dispositif consommateur 113. Lorsque le volume de trafic depuis ledit dispositif fournisseur 110 vers ledit dispositif consommateur 113 est inférieur ou égal au premier seuil TH1 et que le volume de trafic depuis ledit dispositif consommateur 113 vers ledit dispositif fournisseur 110 est inférieur ou égal au second seuil TH2, le second dispositif pont 112 repasse dans l'état 1211 ; sinon, le second dispositif pont 112 passe dans un état 1213. Un cas particulier se présente lorsque le second dispositif pont 112 a reçu en provenance du réseau de communication sans-fil 121 une demande de mise en fonctionnement nominal dudit dispositif consommateur 113. Dans ce cas, le second dispositif pont 112 passe dans l'état 1213, même si le volume de trafic bidirectionnel entre ledit dispositif fournisseur 110 et ledit dispositif consommateur 113 est faible.

Lorsque le second dispositif pont 112 détecte que ledit dispositif consommateur 113 est repassé en mode de fonctionnement nominal et que le second dispositif pont 112 est dans l'état 1211, le second dispositif pont 112 passe dans l'état 1213.

Dans l'état 1213, le second dispositif pont 112 configure l'unité de traitement 321 de manière à être pleinement active. Puis, le second dispositif pont 112 passe dans un état 1214 dans lequel le second dispositif pont 112 reconfigure l'interface 322 et l'interface 320 de manière à être pleinement actives. Puis, le second dispositif pont 112 retourne à l'état 1203, c'est-à-dire que le second dispositif pont 112 retourne en mode de fonctionnement nominal.

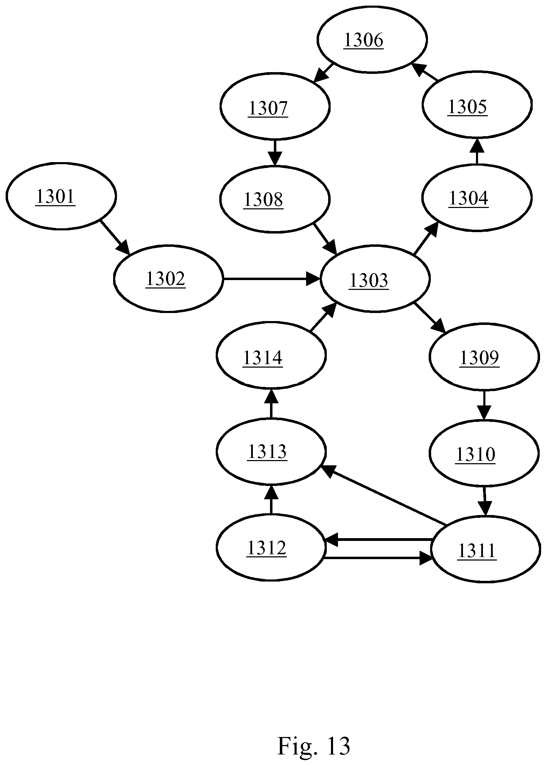

La Fig. 13 illustre schématiquement une machine d'états mise en oeuvre par le premier dispositif pont 111 pour réaliser les scénarii précédents

La machine d'état de la Fig. 13 débute dans un état 1301 dans lequel le premier dispositif pont 111 est initialisé. Un appairage entre le premier dispositif pont 111 et le second dispositif pont 112 peut être mis en oeuvre lors de l'initialisation du premier dispositif pont 111. Une fois l'initialisation terminée et lorsque le réseau de communication sans-fil 121 est de type Wi-Fi, le premier dispositif pont 111 passe dans un état 1302 dans lequel le premier dispositif pont 111 détermine quelle configuration Wi-Fi est à appliquer lorsque l'interface 312 est active à performance réduite, grâce à des mesures de niveau de signal reçu (du second dispositif pont 112) et à des tests d'écoute. Le premier dispositif pont 111 passe ensuite dans un état 1303 dans lequel le premier dispositif pont 111 est en mode de fonctionnement nominal. Le premier dispositif pont 111 évalue alors le volume de trafic bidirectionnel entre ledit dispositif fournisseur 110 et ledit dispositif consommateur 113.

Lorsque le premier dispositif pont 111 détecte une désactivation du premier lien filaire 120 et que le premier dispositif pont 111 est dans l'état 1303, le premier dispositif pont 111 passe dans un état 1304. Lorsque le premier dispositif pont 111 détecte un faible niveau de trafic bidirectionnel entre ledit dispositif fournisseur 110 et ledit dispositif consommateur 113 ou détecte que le second dispositif pont 112 est déconnecté du réseau de communication sans-fil 121, le premier dispositif pont 111 passe dans un état 1309. Dans un mode de réalisation particulier, le premier dispositif pont 111 passe dans un état 1309, lorsque le premier dispositif pont 111 détecte un faible niveau de trafic bidirectionnel entre ledit dispositif fournisseur 110 et ledit dispositif consommateur 113 ou détecte qu'aucun dispositif client n'est connecté au réseau de communication sans-fil 121, éventuellement depuis un laps de temps prédéfini.

Dans l'état 1304, le premier dispositif pont 111 désactive l'interface 312 (qui permet de connecter le réseau de communication sans-fil 121). Ensuite, le premier dispositif pont 111 passe dans un état 1305 dans lequel le premier dispositif pont 111 désactive, si possible, l'unité de traitement 311. Ensuite, le premier dispositif pont 111 passe dans un état 1306 dans lequel l'interface 310 (qui permet de connecter le premier dispositif pont 111 audit dispositif fournisseur 110) est configurée de manière à être active à performance réduite. Le premier dispositif pont 111 est alors en mode d'arrêt.

Lorsque le premier dispositif pont 111 détecte une réactivation du premier lien filaire 120 et que le premier dispositif pont 111 est dans l'état 1306, le premier dispositif pont 111 passe dans un état 1307 dans lequel l'interface 310 et l'unité de traitement 311 sont configurées de manière à être pleinement actives. Le premier dispositif pont 111 passe alors dans un état 1308 dans lequel le premier dispositif pont 111 reconfigure l'interface 312 de manière à être pleinement active. Puis, le premier dispositif pont 111 retourne à l'état 1303, c'est-à-dire que le premier dispositif pont 111 retourne en mode de fonctionnement nominal.

Dans l'état 1309, le premier dispositif pont 111 configure l'interface 312 (qui permet de connecter le réseau de communication sans-fil 121) de manière à être active à performance réduite. Ensuite, le premier dispositif pont 111 passe dans un état 1310 dans lequel le premier dispositif pont 111 configure, si possible, l'unité de traitement 311 de manière à être active à performance réduite. Ensuite, le premier dispositif pont 111 passe dans un état 1311 dans lequel l'interface 310 est configurée de manière à être active à performance réduite. Le premier dispositif pont 111 est alors en mode d'économie d'énergie.

Lorsque le premier dispositif pont 111 reçoit des données en provenance du premier lien filaire 120 ou en provenance du réseau de communication sans-fil 121 et que le premier dispositif pont 111 est dans l'état 1311, le premier dispositif pont 111 passe dans un état 1312 dans lequel le premier dispositif pont 111 évalue le volume de trafic bidirectionnel entre ledit dispositif fournisseur 110 et ledit dispositif consommateur 113. Lorsque le volume de trafic depuis ledit dispositif fournisseur 110 vers ledit dispositif consommateur 113 est inférieur ou égal au premier seuil TH1 et que le volume de trafic depuis ledit dispositif consommateur 113 vers ledit dispositif fournisseur 110 est inférieur ou égal au second seuil TH2, le premier dispositif pont 111 repasse dans l'état 1311 ; sinon, le premier dispositif pont 111 passe dans un état 1313. Un cas particulier se présente lorsque le premier dispositif pont 111 a reçu en provenance du premier lien filaire 120 une demande de mise en fonctionnement nominal dudit dispositif consommateur 113. Dans ce cas, le premier dispositif pont 111 passe dans l'état 1313, même si le volume de trafic bidirectionnel entre ledit dispositif fournisseur 110 et ledit dispositif consommateur 113 est faible.

Lorsque le premier dispositif pont 111 détecte que le second dispositif pont 112 s'est reconnecté au réseau de communication sans-fil 121 et que le premier dispositif pont 111 est dans l'état 1311, le premier dispositif pont 111 passe dans l'état 1313. Dans un mode de réalisation particulier, le premier dispositif pont 111 passe dans l'état 1313 lorsqu'au moins un dispositif client se reconnecte au réseau de communication sans-fil 121.

Dans l'état 1313, le premier dispositif pont 111 configure l'unité de traitement 311 de manière à être pleinement active. Puis, le premier dispositif pont 111 passe dans un état 1314 dans lequel le premier dispositif pont 111 reconfigure l'interface 312 et l'interface 310 de manière à être pleinement actives. Puis, le premier dispositif pont 111 retourne à l'état 1203, c'est-à-dire que le premier dispositif pont 111 retourne en mode de fonctionnement nominal.

## Revendications

1. Dispositif pont, dit premier dispositif pont (111), d'un système de transmission de données comprenant un second dispositif pont (112), les premier et second dispositif ponts étant destinés à être interconnectés via un réseau de communication sans-fil (121), le premier dispositif pont étant adapté à connecter un dispositif fournisseur de données via un lien filaire (120), **caractérisé en ce que** le premier dispositif pont est configurable dans l'un des modes suivants :
- un mode de fonctionnement nominal (1303) ;
- un mode d'économie d'énergie (1311) dans lequel, au moins, une interface avec ledit lien filaire et une interface avec le réseau de communication sont actives à performance réduite ; et
- un mode d'arrêt (1306) dans lequel, au moins, l'interface avec le réseau de communication est désactivée, et dans lequel l'interface avec ledit lien filaire est active à performance réduite ;
et **en ce que** le premier dispositif pont est adapté pour basculer du mode de fonctionnement nominal (1303) au mode d'arrêt (1306) suite à une détection de désactivation du lien filaire, et
le premier dispositif pont est adapté pour basculer du mode de fonctionnement nominal (1303) au mode d'économie d'énergie (1311) suite à une détection que le second dispositif pont est déconnecté du réseau de communication sans-fil ou que le second dispositif pont est passé en mode d'économie d'énergie ou à une détection de volume de trafic bidirectionnel entre ledit dispositif fournisseur et ledit dispositif consommateur inférieur ou égal à un seuil prédéfini.

2. Dispositif pont, dit second dispositif pont (112), d'un système de transmission de données comprenant un premier dispositif pont (111), les premier et second dispositifs ponts étant destinés à être interconnectés via un réseau de communication sans-fil (121), le second dispositif pont étant adapté à connecter un dispositif consommateur de données (113) via un lien filaire (122), **caractérisé en ce que** le second dispositif pont est configurable dans l'un des modes suivants :
- un mode de fonctionnement nominal (1203) ;
- un mode d'économie d'énergie (1211) dans lequel, au moins, une interface avec ledit lien filaire et une interface avec le réseau de communication sont actives à performance réduite; et
- un mode d'arrêt (1206) dans lequel, au moins, l'interface avec le réseau de communication est désactivée, et dans lequel l'interface avec ledit lien filaire est active à performance réduite ;
et **en ce que** le second dispositif pont est adapté pour basculer du mode de fonctionnement nominal (1203) au mode d'arrêt (1206) suite à une détection de désactivation du lien filaire, et
le second dispositif pont est adapté pour basculer du mode de fonctionnement nominal (1203) au mode d'économie d'énergie (1211) suite à une détection de mise en hibernation dudit dispositif consommateur ou à une détection de déconnexion du réseau de communication sans-fil ou à une détection de volume de trafic bidirectionnel entre ledit dispositif fournisseur et ledit dispositif consommateur inférieur ou égal à un seuil prédéfini.

3. Système de transmission de données comprenant un premier dispositif pont (111) selon la revendication 1 et un second dispositif pont (112) selon la revendication 2.

4. Système de transmission de données selon la revendication 3, **caractérisé en ce que** le premier dispositif pont est adapté pour basculer du mode d'arrêt (1306) au mode de fonctionnement nominal (1303) suite à une détection de réactivation du premier lien filaire,
le premier dispositif pont est adapté pour basculer du mode d'économie d'énergie (1311) au mode de fonctionnement nominal (1303) suite à une réception via le premier lien filaire d'une demande de mise en fonctionnement nominal dudit dispositif consommateur ou à une détection de volume de trafic entre ledit dispositif fournisseur et ledit dispositif consommateur supérieur ou égal à un seuil prédéfini, ou suite à une reconnexion du second dispositif pont au réseau de communication sans-fil,
le second dispositif pont est adapté pour basculer du mode d'arrêt (1206) au mode de fonctionnement nominal (1203) suite à une détection de réactivation du second lien filaire,
et le second dispositif pont est adapté pour basculer du mode d'économie d'énergie (1211) au mode de fonctionnement nominal (1203) suite à une réception via le réseau de communication sans-fil d'une demande de mise en fonctionnement nominal dudit dispositif consommateur ou à une réception via le second lien filaire d'un message indiquant que ledit dispositif consommateur est sorti d'hibernation ou à une détection de volume de trafic entre ledit dispositif fournisseur et ledit dispositif consommateur supérieur ou égal à un seuil prédéfini.

5. Système de transmission de données selon la revendication 4, **caractérisé en ce que** la demande de mise en fonctionnement nominal dudit dispositif consommateur est un paquet magique à destination dudit dispositif consommateur selon le protocole Wake On LAN.

6. Système de transmission de données selon l'une quelconque des revendications 3 à 5, **caractérisé en ce que** le second dispositif pont détecte la mise en hibernation dudit dispositif consommateur :
- en émettant régulièrement un message de sonde à destination dudit dispositif consommateur pour tester si ledit dispositif consommateur est mis en hibernation ; ou
- en analysant des échanges entre ledit dispositif fournisseur et ledit dispositif consommateur selon le standard UPnP Low Power ; ou
- en recevant dudit dispositif consommateur un message indiquant une mise en hibernation dudit dispositif consommateur.

7. Système de transmission de données selon l'une quelconque des revendications 3 à 6, **caractérisé en ce que** la détection de volume de trafic bidirectionnel entre ledit dispositif fournisseur et ledit dispositif consommateur est effectuée par comparaison d'un remplissage des files d'attente du dispositif pont concerné avec des seuils respectifs prédéfinis.

8. Système de transmission de données selon l'une quelconque des revendications 3 à 7, **caractérisé en ce que** les premier et second liens filaires sont de type Ethernet et le réseau de communication sans-fil est de type Wi-Fi.

9. Système de transmission de données selon l'une quelconque des revendications 3 à 8, **caractérisé en ce que** le système comporte ledit dispositif fournisseur et ledit dispositif consommateur, ledit dispositif fournisseur est une passerelle résidentielle adaptée pour transmettre des données audio-vidéo audit dispositif consommateur, et ledit dispositif consommateur est un dispositif décodeur adapté pour décoder les données audio-vidéo reçues du dispositif fournisseur.

10. Procédé mis en oeuvre par un premier dispositif pont (111) d'un système de transmission de données comprenant en outre un second dispositif pont (112), les premier et second dispositifs ponts étant interconnectés via un réseau de communication sans-fil (121), le premier dispositif pont étant connecté à un dispositif fournisseur de données via un lien filaire (120), le second dispositif pont étant connecté à un dispositif consommateur de données, **caractérisé en ce que** le premier dispositif pont est configurable dans l'un des modes suivants :
- un mode de fonctionnement nominal (1303) ;
- un mode d'économie d'énergie (1311) dans lequel, au moins, une interface avec ledit lien filaire et une interface avec le réseau de communication sont actives ; et
- un mode d'arrêt (1306) dans lequel, au moins, l'interface avec le réseau de communication est désactivée, et dans lequel l'interface avec ledit lien filaire est active à performance réduite ;
et **en ce que** le premier dispositif pont bascule du mode de fonctionnement nominal (1303) au mode d'arrêt (1306) suite à une détection de désactivation du lien filaire, et le premier dispositif pont bascule du mode de fonctionnement nominal (1303) au mode d'économie d'énergie (1311) suite à une détection que le second dispositif pont est déconnecté du réseau de communication sans-fil ou que le second dispositif pont est passé en mode d'économie d'énergie ou à une détection de volume de trafic bidirectionnel entre ledit dispositif fournisseur et ledit dispositif consommateur inférieur ou égal à un seuil prédéfini.

11. Procédé mis en oeuvre par un second dispositif pont (112) d'un système de transmission de données comprenant en outre un premier dispositif pont (111), les premier et second dispositifs ponts étant interconnectés via un réseau de communication sans-fil (121), le premier dispositif pont étant connecté à un dispositif fournisseur de données (110), le second dispositif pont étant connecté à un dispositif consommateur de données (113) via un lien filaire (122), **caractérisé en ce que** le second dispositif pont est configurable dans l'un des modes suivants :
- un mode de fonctionnement nominal (1203) ;
- un mode d'économie d'énergie (1211) dans lequel, au moins, une interface avec ledit lien filaire et une interface avec le réseau de communication sont actives à performance réduite ; et
- un mode d'arrêt dans lequel, au moins, l'interface avec le réseau de communication est désactivée, et dans lequel l'interface avec ledit lien filaire est à performance réduite ;
et **en ce que** le second dispositif pont bascule du mode de fonctionnement nominal (1203) au mode d'arrêt (1206) suite à une détection de désactivation du lien filaire, et le second dispositif pont bascule du mode de fonctionnement nominal (1203) au mode d'économie d'énergie (1211) suite à une détection de mise en hibernation dudit dispositif consommateur ou à une détection de déconnexion du réseau de communication sans-fil ou à une détection de volume de trafic bidirectionnel entre ledit dispositif fournisseur et ledit dispositif consommateur inférieur ou égal à un seuil prédéfini.

12. Produit programme d'ordinateur, **caractérisé en ce qu'**il comprend des instructions, qui lorsque le programme est exécuté par un dispositif pont, conduisent le dispositif pont à mettre en oeuvre la méthode selon la revendication 10.

13. Produit programme d'ordinateur, **caractérisé en ce qu'**il comprend des instructions, qui lorsque le programme est exécuté par un dispositif pont, conduisent le dispositif pont à mettre en oeuvre la méthode selon la revendication 11.

14. Moyens de stockage, **caractérisés en ce qu'**ils stockent un programme d'ordinateur comprenant des instructions pour mettre en oeuvre, par un dispositif pont, le procédé selon la revendication 10, lorsque ledit programme est exécuté par un processeur dudit dispositif pont.

15. Moyens de stockage, **caractérisés en ce qu'**ils stockent un programme d'ordinateur comprenant des instructions pour mettre en oeuvre, par un dispositif pont, le procédé selon la revendication 11, lorsque ledit programme est exécuté par un processeur dudit dispositif pont.

## Patentansprüche

1. Brückenvorrichtung, erste Brückenvorrichtung (111) genannt, eines Datenübertragungssystems, das eine zweite Brückenvorrichtung (112) enthält, wobei die erste und die zweite Brückenvorrichtung dazu bestimmt sind, über ein drahtloses Kommunikationsnetz (121) miteinander verbunden zu werden, wobei die erste Brückenvorrichtung geeignet ist, eine Datenliefervorrichtung über einen Drahtlink (120) zu verbinden, **dadurch gekennzeichnet, dass** die erste Brückenvorrichtung in einem der folgenden Modi konfiguriert werden kann:
- einem Nennbetriebsmodus (1303);
- einem Energiesparmodus (1311), in dem mindestens eine Schnittstelle mit dem Drahtlink und eine Schnittstelle mit dem Kommunikationsnetz mit reduzierter Leistung aktiv sind; und
- einem Stoppmodus (1306), in dem mindestens die Schnittstelle mit dem Kommunikationsnetz deaktiviert ist, und in dem die Schnittstelle mit dem Drahtlink mit reduzierter Leistung aktiv ist;
und dass die erste Brückenvorrichtung geeignet ist, nach einer Erfassung der Deaktivierung des Drahtlinks vom Nennbetriebsmodus (1303) in den Stoppmodus (1306) umzuschalten, und
die erste Brückenvorrichtung geeignet ist, nach einer Erfassung, dass die zweite Brückenvorrichtung vom drahtlosen Kommunikationsnetz getrennt ist, oder dass die zweite Brückenvorrichtung in den Energiesparmodus übergegangen ist, oder einer Erfassung eines bidirektionalen Verkehrsvolumens zwischen der Liefervorrichtung und der Verbrauchervorrichtung niedriger als eine oder gleich einer vordefinierten Schwelle vom Nennbetriebsmodus (1303) in den Energiesparmodus (1311) umzuschalten.

2. Brückenvorrichtung, zweite Brückenvorrichtung (112) genannt, eines Datenübertragungssystems, das eine erste Brückenvorrichtung (111) enthält, wobei die erste und die zweite Brückenvorrichtung dazu bestimmt sind, über ein drahtloses Kommunikationsnetz (121) miteinander verbunden zu werden, wobei die zweite Brückenvorrichtung geeignet ist, eine Datenverbrauchsvorrichtung (113) über einen Drahtlink (122) zu verbinden, **dadurch gekennzeichnet, dass** die zweite Brückenvorrichtung in einem der folgenden Modi konfiguriert werden kann:
- einem Nennbetriebsmodus (1203);
- einem Energiesparmodus (1211), in dem mindestens eine Schnittstelle mit dem Drahtlink und eine Schnittstelle mit dem Kommunikationsnetz mit reduzierter Leistung aktiv sind; und
- einem Stoppmodus (1206), in dem mindestens die Schnittstelle mit dem Kommunikationsnetz deaktiviert ist, und in dem die Schnittstelle mit dem Drahtlink mit reduzierter Leistung aktiv ist;
und dass die zweite Brückenvorrichtung geeignet ist, nach einer Erfassung der Deaktivierung des Drahtlinks vom Nennbetriebsmodus (1203) in den Stoppmodus (1206) umzuschalten, und
die zweite Brückenvorrichtung geeignet ist, nach einer Erfassung eines Versetzens der Verbrauchsvorrichtung in den Ruhezustand, oder einer Erfassung des Trennens des drahtlosen Kommunikationsnetzes, oder einer Erfassung eines bidirektionalen Verkehrsvolumens zwischen der Liefervorrichtung und der Verbrauchsvorrichtung niedriger als die oder gleich einer vordefinierten Schwelle vom Nennbetriebsmodus (1203) in den Energiesparmodus (1211) umzuschalten.

3. Datenübertragungssystem, das eine erste Brückenvorrichtung (111) nach Anspruch 1 und eine zweite Brückenvorrichtung (112) nach Anspruch 2 enthält.

4. Datenübertragungssystem nach Anspruch 3, **dadurch gekennzeichnet, dass** die erste Brückenvorrichtung geeignet ist, nach einer Erfassung der Reaktivierung des ersten Drahtlinks vom Stoppmodus (1306) in den Nennbetriebsmodus (1303) umzuschalten,
die erste Brückenvorrichtung geeignet ist, nach einem Empfang eines Antrags auf Versetzen der Verbrauchsvorrichtung in den Nennbetrieb über den ersten Drahtlink, oder einer Erfassung eines Verkehrsvolumens zwischen der Liefervorrichtung und der Verbrauchsvorrichtung höher als eine oder gleich einer vordefinierten Schwelle, oder nach einer Wiederverbindung der zweiten Brückenvorrichtung mit dem drahtlosen Kommunikationsnetzest vom Energiesparmodus (1311) in den Nennbetriebsmodus (1303) umzuschalten,
die zweite Brückenvorrichtung geeignet ist, nach einer Erfassung einer Reaktivierung des zweiten Drahtlinks vom Stoppmodus (1206) in den Nennbetriebsmodus (1203) umzuschalten,
und die zweite Brückenvorrichtung geeignet ist, nach einem Empfang eines Antrags auf Versetzen der Verbrauchsvorrichtung in den Nennbetrieb über das drahtlose Kommunikationsnetz, oder einem Empfang einer Nachricht über den zweiten Drahtlink, die anzeigt, dass die Verbrauchsvorrichtung den Ruhezustand verlassen hat, oder einer Erfassung eines Verkehrsvolumens zwischen der Liefervorrichtung und der Verbrauchsvorrichtung höher als eine oder gleich einer vordefinierten Schwelle vom Energiesparmodus (1211) in den Nennbetriebsmodus (1203) umzuschalten.

5. Datenübertragungssystem nach Anspruch 4, **dadurch gekennzeichnet, dass** der Antrag auf Versetzen der Verbrauchsvorrichtung in den Nennbetrieb ein für die Verbrauchsvorrichtung bestimmtes MagicPacket gemäß dem Protokoll Wake On LAN ist.

6. Datenübertragungssystem nach einem der Ansprüche 3 bis 5, **dadurch gekennzeichnet, dass** die zweite Brückenvorrichtung das Versetzen der Verbrauchsvorrichtung in den Ruhezustand erfasst:
- indem sie regelmäßig eine Sensornachricht an die Verbrauchsvorrichtung sendet, um zu testen, ob die Verbrauchsvorrichtung in den Ruhezustand versetzt ist; oder
- indem sie Austauschvorgänge zwischen der Liefervorrichtung und der Verbrauchsvorrichtung gemäß dem Standard UPnP Low Power analysiert; oder
- indem sie von der Verbrauchsvorrichtung eine Nachricht empfängt, die ein Versetzen der Verbrauchsvorrichtung in den Ruhezustand anzeigt.

7. Datenübertragungssystem nach einem der Ansprüche 3 bis 6, **dadurch gekennzeichnet, dass** die Erfassung eines bidirektionalen Verkehrsvolumens zwischen der Liefervorrichtung und der Verbrauchsvorrichtung durch Vergleich eines Füllens der Warteschlangen der betroffenen Brückenvorrichtung mit jeweiligen vordefinierten Schwellen ausgeführt wird.

8. Datenübertragungssystem nach einem der Ansprüche 3 bis 7, **dadurch gekennzeichnet, dass** der erste und der zweite Drahtlink vom Typ Ethernet sind, und das drahtlose Kommunikationsnetz vom Typ Wi-Fi ist.

9. Datenübertragungssystem nach einem der Ansprüche 3 bis 8, **dadurch gekennzeichnet, dass** das System die Liefervorrichtung und die Verbrauchsvorrichtung aufweist, wobei die Liefervorrichtung ein Residential Gateway ist, das geeignet ist, Audio-Video-Daten an die Verbrauchsvorrichtung zu übertragen, und die Verbrauchsvorrichtung eine Decodiervorrichtung ist, die geeignet ist, die von der Liefervorrichtung empfangenen Audio-VideoDaten zu decodieren.

10. Verfahren, das von einer ersten Brückenvorrichtung (111) eines Datenübertragungssystems durchgeführt wird, das außerdem eine zweite Brückenvorrichtung (112) enthält, wobei die erste und die zweite Brückenvorrichtung über ein drahtloses Kommunikationsnetz (121) miteinander verbunden sind, wobei die erste Brückenvorrichtung über einen Drahtlink (120) mit einer Datenliefervorrichtung verbunden ist, wobei die zweite Brückenvorrichtung mit einer Datenverbrauchsvorrichtung verbunden ist, **dadurch gekennzeichnet, dass** die erste Brückenvorrichtung in einem der folgenden Modi konfiguriert werden kann:
- einem Nennbetriebsmodus (1303);
- einem Energiesparmodus (1311), in dem mindestens eine Schnittstelle mit dem Drahtlink und eine Schnittstelle mit dem Kommunikationsnetz mit reduzierter Leistung aktiv sind; und
- einem Stoppmodus (1306), in dem mindestens die Schnittstelle mit dem Kommunikationsnetz deaktiviert ist, und in dem die Schnittstelle mit dem Drahtlink mit reduzierter Leistung aktiv ist;
und dass die erste Brückenvorrichtung nach einer Erfassung der Deaktivierung des Drahtlinks vom Nennbetriebsmodus (1303) in den Stoppmodus (1306) umschaltet, und die erste Brückenvorrichtung nach einer Erfassung, dass die zweite Brückenvorrichtung vom drahtlosen Kommunikationsnetz getrennt ist, oder dass die zweite Brückenvorrichtung in den Energiesparmodus übergegangen ist, oder einer Erfassung eines bidirektionalen Verkehrsvolumens zwischen der Liefervorrichtung und der Verbrauchervorrichtung niedriger als eine oder gleich einer vordefinierten Schwelle vom Nennbetriebsmodus (1303) in den Energiesparmodus (1311) umschaltet.

11. Verfahren, das von einer zweiten Brückenvorrichtung (112) eines Datenübertragungssystems durchgeführt wird, das außerdem eine erste Brückenvorrichtung (111) enthält, wobei die erste und die zweite Brückeneinrichtung über ein drahtloses Kommunikationsnetz (121) miteinander verbunden sind, wobei die erste Brückenvorrichtung mit einer Datenliefervorrichtung (110) verbunden ist, wobei die zweite Brückenvorrichtung über einen Drahtlink (122) mit einer Datenverbrauchsvorrichtung (113) verbunden ist, **dadurch gekennzeichnet, dass** die zweite Brückenvorrichtung in einem der folgenden Modi konfiguriert werden kann:
- einem Nennbetriebsmodus (1203);
- einem Energiesparmodus (1211), in dem mindestens eine Schnittstelle mit dem Drahtlink und eine Schnittstelle mit dem Kommunikationsnetz mit reduzierter Leistung aktiv sind; und
- einem Stoppmodus, in dem mindestens die Schnittstelle mit dem Kommunikationsnetz deaktiviert ist, und in dem die Schnittstelle mit dem Drahtlink mit reduzierter Leistung ist;
und dass die zweite Brückenvorrichtung nach einer Erfassung der Deaktivierung des Drahtlinks vom Nennbetriebsmodus (1203) in den Stoppmodus (1206) umschaltet, und die zweite Brückenvorrichtung nach einer Erfassung eines Versetzens der Verbrauchsvorrichtung in den Ruhezustand, oder einer Erfassung des Trennens des drahtlosen Kommunikationsnetzes, oder einer Erfassung eines bidirektionalen Verkehrsvolumens zwischen der Liefervorrichtung und der Verbrauchsvorrichtung niedriger als die oder gleich einer vordefinierten Schwelle vom Nennbetriebsmodus (1203) in den Energiesparmodus (1211) umschaltet.

12. Computerprogrammprodukt, **dadurch gekennzeichnet, dass** es Anweisungen enthält, die, wenn das Programm von einer Brückenvorrichtung ausgeführt wird, die Brückenvorrichtung dazu bringen, das Verfahren nach Anspruch 10 durchzuführen.

13. Computerprogrammprodukt, **dadurch gekennzeichnet, dass** es Anweisungen enthält, die, wenn das Programm von einer Brückenvorrichtung ausgeführt wird, die Brückenvorrichtung dazu bringen, das Verfahren nach Anspruch 11 durchzuführen.

14. Speichereinrichtungen, **dadurch gekennzeichnet, dass** sie ein Computerprogramm speichern, das Anweisungen enthält, um durch eine Brückenvorrichtung das Verfahren nach Anspruch 10 durchzuführen, wenn das Programm von einem Prozessor der Brückenvorrichtung ausgeführt wird.

15. Speichereinrichtungen, **dadurch gekennzeichnet, dass** sie ein Computerprogramm speichern, das Anweisungen enthält, um durch eine Brückenvorrichtung das Verfahren nach Anspruch 11 durchzuführen, wenn das Programm von einem Prozessor der Brückenvorrichtung ausgeführt wird.

## Claims

1. Bridge device, referred to as the first bridge device (111), of a data transmission system further comprising a second bridge device (112), the first and second bridge devices being intended to be interconnected via a wireless communication network (121), the first bridge device being adapted for connecting a data-supplying device via a wired link (12), , **characterised in that** the first bridge device is able to be configured in one of the following modes:
- a nominal operating mode (1303);
- an energy saving mode (1311) in which, at least, an interface with said wired link and an interface with the communication network are active at reduced performance; and
- a stop mode (1306) in which, at least, the interface with the communication network is deactivated, and in which the interface with said wired link is active at reduced performance;
and **in that** the first bridge device is adapted for switching from the nominal operating mode (1303) to the stop mode (1306) following detection of deactivation of the wired link; and
the first bridge device is adapted for switching from the nominal operating mode (1303) to the energy saving mode (1311) following detection that the second bridge device is disconnected from the wireless communication network or that the second bridge device has gone into the energy saving mode or following detection of a bidirectional traffic volume between said supplying device and said consuming device that is less than or equal to a predefined threshold.

2. Bridge device, referred to as the second bridge device (112), of a data transmission system further comprising a first bridge device (111), the first and second bridge devices being intended to being interconnected via a wireless communication network (121), the second bridge device being adapted for connecting a data-consuming device (113) via a wired link (122), **characterised in that** the second bridge device is able to be configured in one of the following modes:
- a nominal operating mode (1203);
- an energy saving mode (1211) in which, at least, an interface with said wired link and an interface with the communication network are active at reduced performance; and
- a stop mode (1206) in which, at least, the interface with the communication network is deactivated, and in which the interface with said wired link is active at reduced performance;
and **in that** the second bridge device is adapted for switching from the nominal operating mode (1203) to the stop mode (1206) following detection of deactivation of the wired link; and
the second bridge device is adapted for switching from the nominal operating mode (1203) to the energy saving mode (1211) following detection that said consuming device has been put in hibernation or following detection of disconnection of the wireless communication network or following detection of a bidirectional traffic volume between said supplying device and said consuming device that is less than or equal to a predefined threshold.

3. Data transmission system comprising a first bridge device (111) according to claim 1 and a second bridge device (112) according to claim 2.

4. Data transmission system according to claim 3, **characterised in that** the first bridge device is adapted for switching from the stop mode (1306) to the nominal operating mode (1303) following a detection of reactivation of the first wired link,
the first bridge device is adapted for switching from the energy saving mode (1311) to the nominal operating mode (1303) following reception via the first wired link of a request to put said consuming device in nominal operating mode or following detection of a volume of traffic between said supplying device and said consuming device that is greater than or equal to a predefined threshold, or following reconnection of the second bridge device to the wireless communication network,
the second bridge device is adapted for switching from the stop mode (1206) to the nominal operating mode (1203) following detection of reactivation of the second wired link,
and the second bridge device is adapted for switching from the energy saving mode (1211) to the nominal operating mode (1203) following reception via the wireless communication network of a request for putting said consuming device in nominal operation or following reception via the second wired link of a message indicating that said consuming device has come out of hibernation or following detection of a volume of traffic between said supplying device and said consuming device that is greater than or equal to a predefined threshold.

5. Data transmission system according to claim 4, **characterised in that** the request for putting said consuming device in nominal operation is a magic packet intended for said consuming device according to the Wake on LAN protocol.

6. Data transmission system according to any one of claims 3 to 5, **characterised in that** the second bridge device detects that said consuming device is put in hibernation:
- by regularly sending a probe message to said consuming device in order to test whether said consuming device is put in hibernation; or
- by analysing exchanges between said supplying device and said consuming device according to the UPnP Low Power standards; or
- by receiving from said consuming device a message indicating that said consuming device is put in hibernation.

7. Data transmission system according to any one of claims 3 to 6, **characterised in that** the detection of volume of bidirectional traffic between said supplying device and said consuming device is detected by comparing a filling of the queues of the bridge device concerned with predefined respective thresholds.

8. Data transmission system according to any one of claims 3 to 7, **characterised in that** the first and second wired links are of the Ethernet type and the wireless communication network is of the Wi-Fi type.

9. Data transmission system according to any one of claims 3 to 8, **characterised in that** the system comprises said supplying device and said consuming device, said supplying device is a residential gateway adapted for transmitting audiovisual data to said consuming device, and said consuming device is a decoding device adapted for decoding the audiovisual data received from the supplying device.

10. Method implemented by a first bridge device (111) of a data transmission system further comprising a second bridge device (112), the first and second bridge devices being interconnected via a wireless communication network (121), the first bridge device being connected to a data-supplying device via a wired link (120), the second bridge device being connected to a data-consuming device, **characterised in that** the first bridge device is able to be configured in one of the following modes:
- a nominal operating mode (1303);
- an energy saving mode (1311) in which, at least, an interface with said wired link and an interface with the communication network are active; and
- a stop mode (1306) in which, at least, the interface with the communication network is deactivated, and in which the interface with said wired link is active at reduced performance;
and **in that** the first bridge device switches from the nominal operating mode (1303) to the stop mode (1306) following detection of deactivation of the wired link; and the first bridge device switches from the nominal operating mode (1303) to the energy saving mode (1311) following detection that the second bridge device is disconnected from the wireless communication network or that the second bridge device has gone into the energy saving mode or following detection of a bidirectional traffic volume between said supplying device and said consuming device that is less than or equal to a predefined threshold.

11. Method implemented by a second bridge device (112) in a data transmission system further comprising a first bridge device (111), the first and second bridge devices being interconnected by a wireless communication network (121), the first bridge device being connected to a data-supplying device (110), the second bridge device being connected to a data-consuming device (113) via a wired link (122), **characterised in that** the second bridge device is able to be configured in one of the following modes:
- a nominal operating mode (1203);
- an energy saving mode (1211) in which, at least, an interface with said wired link and an interface with the communication network are active at reduced performance; and
- a stop mode in which, at least, the interface with the communication network is deactivated, and in which the interface with said wired link is at reduced performance;
and **in that** the second bridge device switches from the nominal operating mode (1203) to the stop mode (1206) following detection of deactivation of the wired link, and the second bridge device switches from the nominal operating mode (1203) to the energy saving mode (1211) following detection that said consuming device has been put in hibernation or following detection of disconnection of the wireless communication network or following detection of a bidirectional traffic volume between said supplying device and said consuming device that is less than or equal to a predefined threshold.

12. Computer program product, **characterised in that** it comprises instructions, which are when the program is executed by a bridge device, make the bridge device to implement the method according to claim 10.

13. Computer program product, **characterised in that** it comprises instructions, which are when the program is executed by a bridge device, make the bridge device to implement the method according to claim 11.

14. Storage means, **characterised in that** they store a computer program comprising instructions for implementing, by a bridge device, the method according to claim 10, when said program is executed by a processor of said bridge device.

15. Storage means, **characterised in that** they store a computer program comprising instructions for implementing, by a bridge device, the method according to claim 11, when said program is executed by a processor of said bridge device.
